(19) Europäisches Patentamt
European Patent Office
Office européen des brevets

(11) **EP 2 135 916 A2**

(12) **EUROPÄISCHE PATENTANMELDUNG**
veröffentlicht nach Art. 153 Abs. 4 EPÜ

(43) Veröffentlichungstag:
**23.12.2009   Patentblatt 2009/52**

(51) Int Cl.:
***C09K 11/08*** *(2006.01)*      ***C08K 13/06*** *(2006.01)*
***C09K 11/77*** *(2006.01)*

(21) Anmeldenummer: 08741812.5

(22) Anmeldetag: **11.03.2008**

(86) Internationale Anmeldenummer:
**PCT/RU2008/000136**

(87) Internationale Veröffentlichungsnummer:
**WO 2008/111878 (18.09.2008 Gazette 2008/38)**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.03.2007   RU 2007108564**

(71) Anmelder:
• **Vorobiev, Victor Andreevich**
  **Stavropol 355029 (RU)**
• **Khramov, Robert Nikolaevich**
  **Moskovskaya obl. 142290 (RU)**

(72) Erfinder:
• **VLASYANZ, Galina Rafailovna**
  **Stavropol, 355029 (RU)**

• **SINELNIKOV, Boris Mikhailovich**
  **Stavropol, 355000 (RU)**
• **KARGIN, Nikolay Ivanovich**
  **Stavropol, 355029 (RU)**
• **KOSOBRYUKHOV, Anatoliy Aleksandrovich**
  **Moskovskaya obl., 142290 (RU)**
• **KRESLAVSKI, Vladimir Danilovich**
  **Moskovsakaya obl., 142290 (RU)**

(74) Vertreter: **Jeck, Anton**
  **Jeck - Fleck - Herrmann**
  **Patentanwälte**
  **Klingengasse 2/1**
  **71665 Vaihingen/Enz (DE)**

(54) **LICHTUMWANDLUNGSMATERIAL UND ZUSAMMENSETZUNG FÜR SEINE HERSTELLUNG**

(57)     Die Erfindung kann für die Herstellung von Gewächshäusern, Glashäusern und Wandverkleidungen, Sonnenschirmen, Beleuchtungs- und Lichtvorrichtungen, Schutzkleidungen und deren Elementen, Suspensionen, Pasten und Cremes verwendet werden. Das Material gemäß der Erfindung weist eine Matrix und mindestens eine zusammengesetzte Verbindung (anorganischer Leuchtstoff) auf, deren Partikelgröße im Bereich von 10-1000nm liegt und deren allgemeine Formel folgendermaßen lautet: $Me_x^a A_y^b R_z^c$ bei $ax + by = cz$, $Me_x^a = Me_{x'}^{a'} + Me_{x''}^{a''} + ...$, $A_y^b = A_{y'}^{b'} + A_{y''}^{b''} + ...R_z^c = R_{z'}^{c'} + R_{z''}^{c''} + ..$, $ax = a'x' + a''x'' + ..$, $by = b'y' + b''y'' + ..$, $cz = c'z' + c''z'' + ...$, $x \geq 1, 0 \geq y \geq 0,0$. Hierin ist Me Yttrium, Lanthan, Zer, Praseodym, Neodym, Samarium, Europium, Gadolinium, Dysprosium, Holmium, Erbium, Ytterbium, Aluminium, Wismuth, Zinn, Titan, Mangan, Kupfer, Silber, Gold, Antimon, Magnesium; R ist Sauerstoff, Schwefel, Fluor, Chlor, Brom, Phosphor, Bor, Vanadium, Molybdän, Wolfram, Zinn, Germanium, Zirkon, Titan, Niob, Tantal, Zer, Aluminium, Gallium, Indium und/oder Verbindungen daraus; a, b und c bedeuten eine Me- bzw. A- bzw. R-Ladung. Die Zusammensetzung zur Gewinnung des genannten Materials enthält die zusammengesetzte Verbindung (anorganischer Leuchtstoff), deren Inhalt im Bereich von 0,0001-10,0 Massen-% und deren Partikelgröße im Bereich von 10-1000nm liegt, wobei der Rest eine matrixbildende Komponente ist, beispielsweise ein Polymer, eine Faser oder ein lack-, creme- oder klebstoffbildendes Mittel.

EP 2 135 916 A2

## Beschreibung

Diese Erfindung betrifft Verbundwerkstoffe, nämlich lichtumsetzende Werkstoffe, welche in der Landwirtschaft, der Medizin, der Biotechnologie und der Leichtindustrie angewendet werden.

Die Sonnenstrahlung unterstützt das gesamte Leben auf der Erde, jedoch ist die günstige biologische Wirkung der UV-Sonnenstrahlung (UVA-320-400 nm, UVB-280-320 nm) keine eindeutige Tatsache. Es wurde festgestellt, dass die UVB-Strahlung für Lebewesen schädlich ist. Sie schädigt DNS, Proteine und Lipide. Die Ozonschicht in der Stratosphäre wird infolge der Luftverunreinigung durch Fluorchlorkohlenwasserstoffe abgebaut. Dadurch erhöht sich die UV-Strahlung an der Erdoberfläche.

Dieses Problem wurde in letzter Zeit besonders akut. Es ist daher erforderlich, Menschen, Tiere und Pflanzen vor der ultravioletten Sonnenstrahlung sowie vor der anthropogenen UV-Strahlung über der normalen Sonnen-UV-Strahlung zu schützen. Es ist bekannt, dass diese Art von Strahlung Hautverbrennungen verursacht und zur Entwicklung von Krebskrankheiten beiträgt.

Die zu lösende Aufgabe besteht in der Herstellung von lichtumsetzenden Werkstoffen. Diese Werkstoffe müssen insbesondere fähig sein, die Sonnen-UV-Strahlung in Strahlung mit längeren Wellen, zum Beispiel Infrarot-, Rot-, Grün- bzw. Blaustrahlung zu modifizieren und diese Eigenschaft über eine längere Zeit aufrechtzuerhalten.

Die Rotstrahlung hat bekanntlich einen positiven Einfluss auf biologische Objekte. Sie erhöht die Fermentaktivität von Katalase, Superoxiddismutase und Glutathionreduktase (Y. A. Vladimirov et al., "Free Radical Biol. Med.", N5, 1988, p. 281-286). Das verstärkt die Synthese der DNS und der Proteine und bedingt gleichzeitig den Abbau der aktiven Sauerstoffformen, denn es ist bekannt, dass diese die Zelle schädigen (T.I. Karu "Photobiology of low-power laser therapy" in V.S. Letokhov et al. "Laser Science and Technology", Harwood Academic Publishers, Chur, Switzerland, 1989). Weiterhin beschleunigt die Rotstrahlung den Wundheilungsverlauf, darunter auch die Hautregeneration nach einem Sonnenbrand.

Außerdem wird die Rotstrahlung mit einer Wellenlänge von 600-630 nm am wirksamsten durch das b-Chlorophyll der grünen Blätter aufgenommen. Dabei wird die Fotosynthese beschleunigt. Das zeigt sich im beschleunigten Zuwachs von Pflanzengrünmasse, in der Erhöhung der Ertragsfähigkeit von Treibhauskulturen und in der Verkürzung der Reifungsfristen (Stoy V., Physiol. Plant, 1965, v. 14, P. 963-971; Inada K., Plant and cell physiol., 1976, v. 17 p. 355- 365; GB 2158833, Minich I.B.), der Einfluss von roter Lumineszenzstrahlung auf die Morphogenese und die Bilanz der endogenen Pflanzenhormone. Autoreferat Inauguraldissertation zur Erlangung der Doktorwürde für Biowissenschaften, Tomsk, 2005).

Dieses Problem wurde in letzter Zeit besonders akut. Es ist daher erforderlich, Menschen, Tiere und Pflanzen vor der ultravioletten Sonnenstrahlung sowie vor der anthropogenen UV-Strahlung über der normalen Sonnen-UV-Strahlung zu schützen. Es ist bekannt, dass diese Art von Strahlung Hautverbrennungen verursacht und zur Entwicklung von Krebskrankheiten beiträgt.

Die zu lösende Aufgabe besteht in der Herstellung von lichtumsetzenden Werkstoffen. Diese Werkstoffe müssen insbesondere fähig sein, die Sonnen-UV-Strahlung in Strahlung mit längeren Wellen, zum Beispiel Infrarot-, Rot-, Grün- bzw. Blaustrahlung zu modifizieren und diese Eigenschaft über eine längere Zeit aufrechtzuerhalten.

Die Rotstrahlung hat bekanntlich einen positiven Einfluss auf biologische Objekte. Sie erhöht die Fermentaktivität von Katalase, Superoxiddismutase und Glutathionreduktase (Y. A. Vladimirov et al., "Free Radical Biol. Med.", N5, 1988, p. 281-286). Das verstärkt die Synthese der DNS und der Proteine und bedingt gleichzeitig den Abbau der aktiven Sauerstoffformen, denn es ist bekannt, dass diese die Zelle schädigen (T.I. Karu "Photobiology of low-power laser therapy" in V.S. Letokhov et al. "Laser Science and Technology", Harwood Academic Publishers, Chur, Switzerland, 1989). Weiterhin beschleunigt die Rotstrahlung den Wundheilungsverlauf, darunter auch die Hautregeneration nach einem Sonnenbrand.

Außerdem wird die Rotstrahlung mit einer Wellenlänge von 600-630 nm am wirksamsten durch das b-Chlorophyll der grünen Blätter aufgenommen. Dabei wird die Fotosynthese beschleunigt. Das zeigt sich im beschleunigten Zuwachs von Pflanzengrünmasse, in der Erhöhung der Ertragsfähigkeit von Treibhauskulturen und in der Verkürzung der Reifungsfristen (Stoy V., Physiol. Plant, 1965, v. 14, P. 963-971; Inada K., Plant and cell physiol., 1976, v. 17 p. 355- 365; GB 2158833, Minich I.B. Der Einfluss von roter Lumineszenzstrahlung auf die Morphogenese und die Bilanz der endogenen Pflanzenhormone. Autoreferat Inauguraldissertation zur Erlangung der Doktorwürde für Biowissenschaften, Tomsk, 2005).

Aus dem Stand der Technik (US 4081300; JP 53-136050; A3-158103, veröffentlicht am 08.07.91; FR 2419955) sind Materialien bekannt, die eine Matrix und einen aktiven Zusatzstoff enthalten. Der aktive Zusatzstoff nimmt die UV-Strahlung auf oder stellt den dosierten Durchgang der UV-Strahlung sicher (WO 94/1735). Als aktiven Zusatzstoff enthält das Material dabei zum Beispiel Ruß und Phthalocyaninfarbstoffe (JP Nr. 53-136050), Benzophenon oder Benzolazimid (FR 2419955), m-tert.-Butylphenylsalicylat oder 2-Hydroxy-4-Ethoxylbenzophenon (JP A3-158103), die Verbindungen von o-Hydroxybenzoe-, Zitronen- und Oxalsäuren in Kombination zum Beispiel mit blauem oder violettem Farbstoff (WO 94/1735). Die Matrix ist zum Beispiel als eine Folie aus thermoplastischen Harzen (US 4081300, JP 53-136050, FR 2419955) oder als Vliesstoff aus Natural- bzw. Kunstfasern (JP A3-158103) oder als eine Platte aus thermoplastischen Harzen (WO 94/1735) oder als Vliesstoff bzw. Faservlies (Verbundstoff) oder als Faden oder als Lack (WO 94/1735) ausgebildet. Die Folienstoffe sind vorwiegend zur Abdeckung von Frühbeeten und Treibhäusern vorgesehen (US 4081300, JP 53-136050, FR 2419955). Der Textilstoff dient hauptsächlich zur Herstellung von Regenschirmen und Planverdecken und Ähnlichem (JP A3-158103). Das plattenförmige Material ist für die Herstellung von Regenschirmen, Planverdecken und sogar Dächern vorgesehen (WO 94/1735).

Jedoch sind alle diese Materialien nicht fähig, die UV-Strahlung in IR-, Rot-, Blau- oder Grünstrahlung umzusetzen.

Aus den CH 667463, GB 2158833 ist ein Material für Lichttransformation bekannt. Es enthält eine Matrix und mindestens eine darin verteilte Koordinationsverbindung von Erdmetallen (Europium, Samarium, Terbium, Gadolinium) als aktiven Zusatzstoff. Der aktive Zusatzstoff stellt die Umsetzung der ultravioletten Lichtkomponente in den orangen-roten Spektralbereich (580-750 nm) sicher. Die Matrix ist als eine Thermoplast-Folie ausgebildet. Die Zusammensetzung zur Herstellung dieses Materials enthält 0,001-5,0 Gew.% des aktiven Zusatzstoffs und 95,0 - 99,99 Gew.% matrixbildenden Bestandteil. Als matrixbildender Bestandteil enthält die Zusammensetzung mindestens ein Kunstharz, welches aus folgender Gruppe von Harzen gewählt wird: Polyethylen, Polypropylen, Polyvinylchlorid (PVC), Polycarbonat, Polystyrol, Polymethylmethacrylat oder deren Copolymer. Allerdings behält ein solcher Werkstoff seine Lichttransformationseigenschaften nur höchstens 60 Tage. Das liegt daran, dass die für seine Herstellung verwendeten Erdmetalle, wie bereits erwähnt, den Koordinationsverbindungen angehören. Solche Koordinationsverbindungen weisen einen schnellen Lichtabbau auf.

Aus RU 2059999 ist ein lichttransformierendes Material bekannt, welches eine Matrix und einen aktiven Zusatzstoff enthält. Als aktiver Zusatzstoff wird darin mindestens ein Verbundstoff mit der allgemeinen Formel $[(La_{1-x}Eu_x)_O]_m(Lig)_n$ verteilt. darin ist Lig = F, Cl, Br, O, S, Se. Dies stellt ebenfalls die Umsetzung der ultravioletten Lichtkomponente in den orangen-roten Spektralbereich (580-750 nm) sicher. Dieses Material ist als eine Thermoplast-Folie ausgebildet. Es setzt sich zusammen aus 0,05-1,0 Gew.% aktivem Zusatzstoff und 99,0-99,95 Gew.% matrixbildendem Bestandteil. Als matrixbildenden Bestandteil enthält die Zusammensetzung mindestens ein Kunstharz, welches aus einer Gruppe von Harzen gewählt wird. Die Gruppe schließt Polyethylen, Copolymer von Ethylen mit Vinylacetat (EVA) oder Polyethylenterephtalat ein. Ein solches Material wandelt ebenfalls den UV-Bereich der Lichtquelle in die Rotstrahlung um. Allerdings behält ein solcher Belag diese (lichtumwandelnde) Eigenschaft nur 300 Tage, denn alle Oxohalogenide und vor allem die Oxoselenide der Seltenerdmetalle werden in der Luft und vor allem im feuchten Medium zerstört.

Der der angemeldeten Erfindung am nächsten kommende Stand der Technik ist das lichttransformierende Material und die Zusammensetzung für seine Herstellung nach RU 2132856. Dieses Material wurde als Prototyp gewählt. Es enthält eine Matrix - Apatit - und mindestens einen Verbundstoff - Europium mit der allgemeinen Formel: $Me_x^m Eu_y^3 R_z^n$ bei $mx + 3y = nz$, $Me_x^m = Me_{x'}^{m'} + Me_{x''}^{m''} + , ..., R_z^n = R_{z'}^{n'} + R_{z''}^{n''} + ..., mx = m'x' + m''x'' + ..., nz = n'z' + n''z'' + ... x \geq 1,0 \geq y > 0,01$, Me ist dabei Yttrium, Lanthan, Cerium, Praseodym, Neodym, Samarium, Europium, Gadolinium, Dysprosium, Holmium, Erbium, Ytterbium, Aluminium, Wismut, Zinn, Titan, Mangan, Calcium, Barium, Zink, Cadmium, Natrium, Kalium, Rubidium, Cäsium; R steht für Sauerstoff, Schwefel, Fluor, Chlor, Brom, Phosphor, Bor, Vanadium, Molybdän, Wolfram, Germanium oder ihre Verbindungen miteinander; m und n stehen für die Ladung des jeweiligen Ions Me oder R.

Die Zusammensetzung zur Materialherstellung enthält Gew.%: Apatit 0,01-10,0; Verbundstoff 0,01-10,0; der Rest - matrixbildender Bestandteil, zum Beispiel Polymere oder Fasern oder eine Zusammensetzung zur Glasproduktion oder ein lackbildender oder leimbildender Stoff. Ein solches Material wandelt auch den UV-Bereich der Lichtquelle in Rotstrahlung um. Allerdings enthält dieses Material Apatit als nichtlumineszierende Substanz, um die Beständigkeit des aktiven Zusatzstoffes gegenüber der Licht-, Luft- und Feuchteinwirkung zu erhöhen. Die Partikelgröße des gemäß dieser technischen Lösung erzeugten lichtumsetzenden Materials darf 5 $\mu$m nicht unterschreiten, da sonst der Lichtumsetzungsfaktor herabgesetzt wird. Außerdem muss in diesem Fall die Konzentration von Luminophor im Material wesentlich erhöht werden.

Der dadurch bedingte Preisaufschlag bei der Herstellung des lichtumsetzenden Materials beträgt sogar bei einer Mindestkonzentration von Luminophor (0,01 Gew.%) 20 bis 30 %.

## Offenbarung der Erfindung

Die durch die vorgeschlagene Erfindung zu lösende technische Hauptaufgabe ist die Erhöhung des Umsetzungsfaktors der UV-Komponente des Sonnenlichts um das 5- bis 6-fache bei Erhaltung der Konzentration von 0,01 Gew.% dank der Anwendung von Luminophor mit Submikron-Partikelgröße.

Das Ergebnis dieser technischen Lösung ist die eventuelle Ermäßigung des durch Luminophor bedingten Preisaufschlags des lichtumsetzenden Materials von 20-30% bis auf 7-5%. Dies wird durch die eventuelle max. 10-fache Dekonzentration von Luminophor im lichtumsetzenden Material möglich.

Eine weitere durch diese Erfindung zu lösende technische Aufgabe ist die Erweiterung des Sortiments von Werkstoffen, welche dazu geeignet sind, Erzeugnisse mit lichtumsetzenden Eigenschaften herzustellen. Das ist durch die Erweiterung der Klassen von anwendbaren Lumineszenzwerkstoffen möglich.

Die gestellten technischen Aufgaben werden folgenderweise gelöst. Es wird ein lichtumsetzendes Material vorgeschlagen, welches eine Matrix und einen aktiven Zusatzstoff (anorganischen Luminophor) einschließt. Der aktive Zusatzstoff setzt die UV-Strahlung in die Orangen-Rotstrahlung um. Dieses Material gemäß der Erfindung enthält als aktiven Zusatzstoff mindestens einen lumineszierenden Verbundstoff mit Submikron-Partikelgrößen im Bereich von 10 nm bis 1000 nm mit folgender allgemeiner Formel:

$$Me_x{}^a A_y{}^b R_z{}^c$$

$$\text{bei } ax + by = cz, \quad Me_x{}^a = Me_{x'}{}^{a'} + Me_{x''}{}^{a''} + ..., \quad A_y{}^b = A_{y'}{}^{b'} + A_{y''}{}^{b''} + ...,$$

$$R_z{}^c = R_{z'}{}^{c'} + R_{z''}{}^{c''} + ..., \quad ax = a'x' + a''x'' + ..., \quad by = b'y' + b''y'' + ..., \quad cz = c'z' + c''z'' + ...,$$

$$x \geq 1{,}0 \geq y \geq 0{,}0001,$$

wobei Me für Yttrium, Lanthan, Cerium, Praseodym, Neodym, Samarium, Europium, Gadolinium, Dysprosium, Holmium, Erbium, Ytterbium, Aluminium, Wismut, Zinn, Titan, Mangan, Calcium, Strontium, Barium, Zink, Cadmium, Natrium, Kalium, Rubidium, Cäsium steht;

A ist Cerium, Praseodym, Neodym, Samarium, Europium, Gadolinium, Dysprosium, Holmium, Erbium, Ytterbium, Wismut, Zinn, Titan, Mangan, Kupfer, Silber, Gold, Antimon, Magnesium.

R ist Sauerstoff, Schwefel, Selen, Tellur, Fluor, Chlor, Brom, Jod, Phosphor, Bor, Vanadium, Molybdän, Wolfram, Zinn, Germanium, Zirkonium, Titan, Niob, Tantal, Cerium, Aluminium, Gallium, Indium und/oder ihre Verbindungen miteinander;

a, b und c stehen für die Ladung der jeweiligen Ionen Me, A oder R oder die Mischung dieser Verbindungen.

Dabei kann der aktive Zusatzstoff innerhalb oder auf der Oberfläche der Matrix verteilt werden.

Das Material enthält den aktiven Zusatzstoff (Luminophor) in einer Menge von mindestens 0,0001 Gew.% vom Materialgewicht.

Das Material enthält zusätzlich mindestens eine Metall-Koordinationsverbindung E.

Diese Metall-Koordinationsverbindung E wird aus einer Gruppe gewählt, welche folgende Verbindungen einschließt: $[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E_4(AA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$,

dabei ist E das Metall, welches aus der Gruppe gewählt ist, die Europium, Samarium, Terbium, Gadolinium einschließt;

H ist das Wasserstoffion;

TTA ist das Thenoyltrifluoroacetonat-Anion,

HFAA ist das Hexafluoracetylacetonat-Anion,

BB ist das Benzoylbenzoat-Anion,

AA ist das Acetylacetonat-Anion,

TFA ist das Trifluoracetat-Anion,

Capr ist das Capronat-Anion,

Ter ist das Terephthalat-Anion (p-Phthalat-Anion),

Phen ist das 1,10-Phenanthrolin,

TPhPO ist das Triphenylphosphinoxid,

DPhG ist das Diphenylguanidin.

Als Metall-Koordinationsverbindung E kann das Material das Produkt der Behandlung des Nitrats von Europium (III), Samarium (III), Terbium (III) oder Gadolinium (III) mit Thenoyltrifluoroaceton oder mit Hexafluoracetylaceton oder mit Acetylaceton oder mit Benzoyl-Benzoesäure oder mit Trifluoressigsäure oder mit Capronsäure oder mit p-Phthalsäure und 1,10-Phenanthrolin oder mit Triphenylphosphinoxid oder mit Diphenylguanidin im Alkohol-Wasser-Medium unter 80-90°C sein. Das Material enthält die Koordinationsverbindung in einer Menge von mindestens 0,001 Gew.% vom Gesamtmaterialgewicht.

Die Matrix ist lichtdurchsichtig ausgebildet.

Das Material enthält als aktiven Zusatzstoff (Luminophor) mindestens einen Verbundstoff (Kompositenverbindung)

bei R - O, Hal mit der Formel $Me_x A_y O_2 Hal$, wobei Hal S, Se oder Te ist;

oder bei R - O, Gal mit der Formel $Me_x A_y O Gal$, wobei Gal F, Cl, I oder Br ist;

oder bei R - $ZrO_3$, $TiO_3$ mit der Formel $Me_x A_y (TiO_3)_{z'} (ZrO_3)_{z''}$;

oder bei R - $(Al_{1-k}Ga_k)_5 O_{12}$ mit der Formel $(Me_{3-y} A_y)(Al_{1-k}Ga_k)_5 O_{12}$;

oder bei R - $(Al_{1-k}Ga_k)_2 O_4$ mit der Formel $(Me_{3-y} A_y)(Al_{1-k}Ga_k)_2 O_4$;

oder bei R- $(Al_{1-k}Ga_k)_{14} O_{25}$ mit der Formel $(Me_{3-y} A_y)_4 (Al_{1-k}Ga_k)_{14} O_{25}$;

oder bei R - $(Al_{1-k}Ga_k)_{12}O_1 9$ mit der Formel $(Me_{3-y}A_y)(Al_{1-k}Ga_k)_{12}O_{19}$;

oder bei R - $B_2O_3$ mit der Formel $Me_xA_y(B_2O_3)_3$;

oder bei R - $PO_4$, Gal mit der Formel $(Me_xA_y)_{10}(PO_4)_6(Gal)_2$, dabei ist Gal = F, Cl;

oder bei R - Gal mit der Formel $(Me_{x'}{}^{a'+} + Me_{x''}{}^{a''})AyGal_4$, dabei ist Gal = F, Cl, I oder Br;

oder bei R - Gal mit der Formel $Me_xA_yGal$, dabei ist Gal = F, Cl, I oder Br;

oder bei R - $SiO_2$ mit der Formel $(Me_xA_y)_2SiO_4$;

oder bei R - $Si_2O_7$ mit der Formel $Me_xA_ySi_2O_7$;

oder bei R - $SiO_5$ mit der Formel $Me_xA_ySiO_5$;

oder bei R - $Al_2Si_2O_8$ mit der Formel $Me_xA_yAl_2Si_2O_8$;

oder bei R - $CeO_2$ mit der Formel $Me_xA_yCeO_3$;

oder bei R - Hal mit der Formel $Me_xA_yHal$, dabei ist Hal = O, S, Se;

oder bei R - $VO_4$ mit der Formel $Me_xA_y(VO_4)_2$;

oder bei R - $BO_3$, $PO_4$ mit der Formel $Me_xA_y(BO_3)_{z'}(PO_4)_{z''}$;

oder bei R - $VO_4$, $PO_4$ mit der Formel $Me_xA_y(VO_4)_{z'}(PO_4)_{z''}$;

oder bei R - $VO_4$, $PO_4$, $BO_3$ mit der Formel $Me_xA_y(VO_4)_{z'}(PO_4)_{z''}(BO_3)_{z'''}$;

oder bei R - $VO_4$, $NbO_4$, $TaO_4$ mit der Formel $Me_xA_y(VO_4)_{z'}(NbO_4)(NbO_4)_{z''}(TaO4)_{z'''}$;

oder bei R - $BO_2$, $WO_4$, $MoO_4$ mit der Formel $Me_xA_y(WO_4)_{z'}(BO_2)_{z''}$ oder $Me_xA_y(MoO_4)_{z'}(BO_2)_{z''}$

oder eine Mischung von diesen Verbindungen.

Dabei enthält das Material als Verbindung mit der allgemeinen Formel $Me_xA_yO_2Hal$ oder $Me_xAyOGal$ das Behandlungsprodukt der Festlösungen der Metalloxide Me und M im alkalischen Halogenidmedium oder Halcogenide bei 800-1280°C. Während der Werkstoffsynthese werden Metalloxide mit einer Partikelgröße von 5 - 800 nm angewendet. Diese Metalloxide werden nach dem Hydrothermalverfahren, Sol-Gel-Verfahren, Brennverfahren, Mikroemulsionsverfahren oder nach dem Pyrolyseverfahren im Hochfrequenzfeld hergestellt.

Als Verbindung mit der allgemeinen Formel $Me_xA_y(TiO_3)_{z'}(ZrO_3)_{z''}$ oder $(Me_{3-y}A_y)(Al_{1-k}Ga_k)_5O_{12}$ oder $(Me_{3-y}A_y)(Al_{1-k}Ga_k)_2O_4$ oder $(Me_{3-y}A_y)_4(Al_{1-k}Ga_k)_{14}O_{25}$ oder $(Me_{3-y}A_y)(Al_{1-k}Ga_k)_{12}O_{19}$ oder $Me_xA_yCeO_3$ enthält das Material die Produkte der Wechselwirkung der Metalloxide unter Temperaturen von 900 - 1400°C im oxidierenden, neutralen bzw. reduzierenden Gasmedium. Bei der Werkstoffsynthese werden Metalloxide mit einer Partikelgröße von 5 bis 800 nm angewendet. Diese Metalloxide werden nach dem Hydrothermalverfahren, Sol-Gel-Verfahren, Brennverfahren, Mikroemulsionsverfahren oder Pyrolyseverfahren im Hochfrequenzfeld hergestellt. Dies stellt die Herstellung von lichtumsetzendem Material mit einer durchschnittlichen Partikelgröße von 10 bis 800 nm sicher.

Als Verbindung mit der allgemeinen Formel $(Me_xA_y)_2SiO_4$ oder $Me_xA_ySi_2O_7$ oder $Me_xA_ySiO_5$ oder $Me_xA_yAl_2Si_2O_8$ enthält das Material die Produkte der Wechselwirkung der Metalloxide und Siliciumdioxid unter Temperaturen von 900 bis 1400°C im oxidierenden, neutralen bzw. Reduktions-Gasmedium. Bei der Werkstoffsynthese werden Metalloxide mit einer Partikelgröße von 5 bis 800 nm angewendet, die nach dem Hydrothermalverfahren, Sol-Gel-Verfahren, Brennverfahren, Mikroemulsionsverfahren oder Pyrolyseverfahren im Hochfrequenzfeld hergestellt werden. Als Siliciumdioxid wird Aerosil A-180, A-300, A-380 mit einer Partikelgröße von unter 0,01 μm eingesetzt. Das stellt die Herstellung von lichtumsetzendem Material mit einer durchschnittlichen Partikelgröße von 10-800 nm sicher.

Als Verbindung mit der allgemeinen Formel $Me_xA_y(B_2O_3)_3$ oder $Me_xA_y(BO_3)_{z'}(PO_4)_{z''}$ oder $Me_xA_y(WO_4)_{z'}(BO_2)_{z''}$ oder $Me_xA_y(MoO_4)_{z'}(BO_2)_{z''}$ enthält das Material die Produkte der Wechselwirkung der Metalloxide und Ammoniumorthophosphat mit Borsäure unter Temperaturen von 900 - 1400°C im oxidierenden, neutralen bzw. Reduktions-Gasmedium. Bei der Werkstoffsynthese werden Metalloxide mit einer Partikelgröße von 5 bis 800 nm verwendet, welche nach dem Hydrothermalverfahren, Sol-Gel-Verfahren, Brennverfahren, Mikroemulsionsverfahren oder Pyrolyseverfahren im Hochfrequenzfeld hergestellt werden. Das stellt die Herstellung von lichtumsetzendem Material mit einer durchschnittlichen Partikelgröße von 10 bis 800 nm sicher.

Als Verbindung mit der allgemeinen Formel $Me_xA_y(VO4)_{z'}(NbO_4)_{z'}(TaO4)_{z''}$ enthält das Material Produkte der Wechselwirkung der Metalloxide unter Temperaturen von 900 bis 1400°C im oxidierenden, neutralen bzw. Reduktions-Gasmedium. Bei der Werkstoffsynthese werden Metalloxide mit einer Partikelgröße von 5 bis 800 nm angewendet, welche nach dem Hydrothermalverfahren, Sol-Gel-Verfahren, Brennverfahren, Mikroemulsionsverfahren oder Pyrolyseverfahren im Hochfrequenzfeld hergestellt werden. Das stellt die Herstellung von lichtumsetzendem Material mit einer durchschnittlichen Partikelgröße von 10 bis 800 nm sicher.

Das Material kann eine Matrix enthalten, die als Folie oder als eine Platte oder als Textil oder als Vliesstoff oder als Fasern ausgebildet sein kann.

Die Matrix kann aus thermoplastischen Harzen ausgebildet werden.

Die Matrix kann aus löslichen Harzen ausgebildet werden.

Die Matrix kann aus Makrodiol (Polyester) ausgebildet werden. Das Makrodiol kann zum Beispiel aus der folgenden Gruppe von Stoffen gewählt werden: Polymethylmethacrylat, Polybutylmethalcrylat, Polycarbonat, Polyethylenterephtkalat und ihre Derivate.

Die Matrix kann aus Polyolefin ausgebildet sein. Das Polyolefin kann zum Beispiel aus der folgenden Gruppe von Stoffen gewählt werden: Polypropylen, Polyvinylchlorid (PVC), Polystyrol, Polyethylen und ihre Derivate.

Die Matrix kann auch aus Polyamid bzw. seinen Derivaten oder aus Copolymer der oben erwähnten Polymeren oder aus einer Mischung dieser Polymere ausgebildet sein.

Die Matrix kann aus natürlichen Fasern wie zum Beispiel Baumwolle, Seide, Wolle, Hanf und ihrer Mischung oder aus Kunstfasern zum Beispiel Viskose, Acetat, Capron, Nylon, Polyamid, Makrodiol, aus ihren Copolymeren, aus ihrer Mischung oder aus Mischfasern oder aus der Mischung von natürlichen und Kunstfasern ausgebildet werden.

Die Matrix kann aus Silikat- bzw. aus modifiziertem Silikatglas ausgebildet werden. Die Matrix kann aus Plexiglas ausgebildet werden.

Das Material kann zusätzlich Lack oder Leim einschließen. Als Lack oder Leim kann das Material zum Beispiel siliciumorganisches Harz oder Polyesterharz oder Polyepoxidharz oder Epoxidharz oder ihre Mischung enthalten.

Die Matrix kann eine pharmazeutische und/oder kosmetische Zusammensetzung aufweisen, um die Haut vor Verletzungen durch Sonnenstrahlung zu schützen.

Um das Wesen der angemeldeten Erfindung zu erklären, wird nachfolgend auf die allgemeine Formel für Kompositverbindungen der Erdmetalle - Luminophore näher eingegangen, die in das vorgeschlagene Material als Zusatzstoff eingeführt werden:

$$Me_x^a \, A_y^b \, R_z^c \text{ bei } ax + by = cz, \; Me_x^a = Me_x^{a'} + Me_x^{a''} + ..., \; A_y^b = A_y^{b'} + A_y^{b''} + ...,$$
$$R_z^c = R_z^{c'} + R_z^{c''} + ..., \; ax = a'x' + a''x'' + ..., \; by = b'y' + b''y'' + ..., \; cz = c'z' + c''z'' + ...,$$
$$x \geq 1,0 \geq y \geq 0,0001,$$

dabei ist

Me - Yttrium, Lanthan, Cerium, Praseodym, Neodym, Samarium, Europium, Gadolinium, Dysprosium, Holmium, Erbium, Ytterbium, Aluminium, Wismut, Zinn, Titan, Mangan, Calzium, Strontium, Barium, Zink, Cadmium, Natrium, Kalium, Rubidium, Cäsium;

A - Cerium, Praseodym, Neodym, Samarium, Europium, Gadolinium, Dysprosium, Holmium, Erbium, Ytterbium, Wismut, Zinn, Titan, Mangan, Kupfer, Silber, Gold, Antimon, Magnesium.

R - Sauerstoff, Schwefel, Fluor, Chlor, Brom, Phosphor, Bor, Vanadium, Molybdän, Wolfram, Zinn, Germanium, Zirkonium, Titan, Niob, Tantal, Cerium, Aluminium, Gallium, Indium und/oder ihre Verbindungen miteinander;

a, b und c bedeuten die Ladung des jeweiligen Ions Me, A oder R.

Diese Formel repräsentiert die Zusammensetzung einer Lumineszenzkompositverbindung. Diese Lumineszenzkompositverbindung umfasst das Basis-Ion der lumineszierenden Verbindung - Me, den lumineszierenden Mittelpunkt - das Aktivatorion A sowie den Anionteil der Verbindung R. Der Anionteil wirkt bei manchen Verbindungen wie Wolframate, Vanadate und Niobate als Strahlungsmittelpunkt.

Der rote und infrarote Spektralbereich weist die höchste Aktivität der positiven Einwirkung auf biologische Objekte auf. (Minich I.B. Der Einfluß von roter Lumineszenzstrahlung auf die Morphogenese und die Bilanz der endogenen Pflanzenhormone. Autoreferat Inauguraldissertation zur Erlangung der Doktorwürde für Biowissenschaften, Tomsk, 2005). Daher ist die Zusammensetzung der Aktivatoren durch jene Elemente bzw. Elementenkomplexe repräsentiert, die in vielen chemischen Verbindungen die Generationsmöglichkeiten unter Einwirkung von UV-Sonnenstrahlung mit Infrarot- und Rotlicht sicherstellen (Shigeo Shionoya, William M.Yen - Phosphor Handbook// CRC Press 1998). Der Aktivatorgehaltsbereich (y) wird durch die Zusammensetzung der Luminophor-Basis festgelegt. Somit variiert der Aktivatorgehalt von 0 (für selbstaktivierte Luminophore, zum Beispiel $CaWO_4$ oder ZnO) bis 0,15 (für aktivierte Luminophore).

Der Anion-Bestandteil der Lumineszenzkompositverbindungen ist in der dargestellten Formel durch die Größe $R_z$ vereinigt. Sie kann Anionen mit unterschiedlicher Zusammensetzung und mit unterschiedlichen Verhältnissen $R_{z'}^{c'} + R_{z''}^{c''} + ...,$ bei $z = z' + z'' + ...,$ beinhalten.

Beispielsweise wird die Zusammensetzung des bekannten lichtumsetzenden Materials - Luminophors Yttriumoxisulfid nach der Aktivierung mit Europium mit folgender Formel wiedergegeben:

$$(Y_x Eu_y)_2 O_2 S,$$

dabei ist Me - $Y_x^{3+}$, A - $E_{uy}^{3+}$, R = $O_2^{2-}$ + $S^{2-}$;
cz = 2 x 2 + 1 x 2 = 6;
bei x = 1,92, ax = 3 x 1,92 = 5,76
bei y = 0,08, by = 3 x 0,08 = 0,24,
daher ax + by = 5,76 + 0,24 und folglich ax + by = cz

Beispielsweise wird die Zusammensetzung des bekannten lichtumsetzenden Materials - Luminophors Yttriumphosphat-Vanadat, aktiviert durch Europium, durch die Formel $Y_x Eu_y (PO_4 (VO_4)$ wiedergegeben.
Dabei ist Me - $Y_x^{3+}$, A - $Eu_y^{3+}$, R = $(PO_4)_1^{3-}$ + $(VO_4)_1^{3-}$;
$cz = 1 \times 3 + 1 \times 3 = 6; bei x = 1,9, ax = 3 \times 1,9 = 5,7;$
bei y = 0,1, by = 3 x 0,1 = 0,3,
daher ax + by = 5,7 + 0,3 = 6
und somit ax + by = cz.

Somit erweist sich die vorgeschlagene Formel für Lumineszenzkompositverbindungen als die umfangreichste für die Beschreibung der Zusammensetzung der Verbundluminophore, welche zwecks Erreichung des technischen Ergebnisses gewählt wurden.

Versuchsweise wurde festgestellt, dass die Anwendung der Luminophore in Nano- oder Submikrongröße bei der Herstellung von lichtumsetzenden Werkstoffen auf der Basis der Polymerverbindungen zur gleichmäßigeren Luminophorverteilung innerhalb des polymeren Materials, zur Erhöhung ihrer mechanischen Festigkeit, zur Standzeitverlängerung und zur Erhöhung des Umsetzungsfaktors um das 5- bis 6-fache beiträgt. Die Luminophore in Submikrongröße weisen einen hohen Absorptionsgrad der UV-Strahlung infolge ihrer Großoberflächigkeit auf. Das ermöglicht es, auf die zusätzliche Einführung von UV-Adsorptionsmitteln und organischen Koordinationsverbindungen der Seltenerdmetalle in die Zusammensetzung der lichtumsetzenden Werkstoffe zu verzichten. Dies in Kombination mit einem erhöhten UV-Strahlungumsetzungsfaktor ermöglicht es, den Preis der lichtumsetzenden Werkstoffe um 15 - 20 % herabzusetzen. Die dabei angewendeten Lumineszenzmaterialien in Submikrongröße werden nach dem Verfahren der Hochtemperatursynthese im festen Zustand hergestellt. Diese Lumineszenzmaterialien sind thermisch sehr fest. Das macht ihre Einführung in die organischen Hartharze, wie etwa ins Polycarbonat, möglich.

Nur die Gesamtheit der genannten kennzeichnenden Merkmale stellt die Lösung der gestellten technischen Aufgabe sicher. Insbesondere wird die Erhöhung des Fotoumformungsfaktors der lichtumsetzenden Werkstoffe gewährleistet. Das ermöglicht es, zusätzliche Wirkungen zu erreichen, zum Beispiel die Festigkeitszunahme und Verlängerung der Lebensdauer, die Herabsetzung der Werkstoffkosten und die Erweiterung des Sortiments der benutzten Leuchtstoffe.

Es sei bemerkt, dass die Wahl der matrixbildenden Komponente zur Herstellung des vorgeschlagenen Materials durch den Bestimmungszweck des aus diesem Material erzeugten Produktes festgelegt wird. Zum Beispiel, wenn das Material zur Abdeckung von Treibhäusern und Frühbeeten vorgesehen ist, dann versteht sich von selbst, dass die Matrix als lichtdurchsichtige Folie ausgeführt werden sollte. Dabei kann als matrixbildende Komponente praktisch beliebiger bekannter Thermoplast oder löslicher Kunstharzfilm, zum Beispiel Polyethylen, Polycarbonat, Polymethylmethacrylat, Polybutylmethacrylat, Polyethylenterephthalat, Polypropylen, Polyvinylchlorid (PVC), Polystyrol, Polyamid eingesetzt werden.

Die Zusammensetzung zur Herstellung von Silikatglas (oder anderem Glas) als matrixbildende Komponente kann dann eingesetzt werden, wenn das vorgeschlagene Material zum Beispiel für die Verglasung von Wohn- und Geschäftsräumen sowie Treibhäusern und Ställen oder für die Herstellung zum Beispiel von Brillengläsern, Fahrzeugscheiben, Sonnenblenden und den Scheiben der Verdeckplanen bestimmt ist.

Die natürlichen und/oder Kunstfasern als matrixbildende Komponente können für die Herstellung von lichttransformierenden Textilbahnen verwendet werden. Die lichttransformierenden Textilbahnen sind zum Beispiel für die Herstellung von Sonnenschutzschirmen und Sonnendächern sowie für die Anfertigung von lichtschützenden Kleidern erforderlich. Die Kunstfasen und unter anderem die Synthesefasern dienen der Herstellung von lichttransformierendem Vlies, welches zum Beispiel in der Landwirtschaft als das sogenannte Abdeckmaterial angewendet wird.

Es sei weiterhin bemerkt, dass die lichtumsetzenden Materialien in Submikrongröße auch bei der Herstellung von Sonnenschutzkreme, -salben, -gel, -emulsionen, - schaum verwendet werden können, was ein neues Anwendungsgebiet darstellt.

**Die besten Ausführungsformen der Erfindung**

Um das vorgeschlagene Material zu erhalten, wird mindestens ein lichtumsetzender Verbundstoff (Luminophor) mit Submikron-Partikelgröße, mindestens eine Koordinationsverbindung und die auf den jeweiligen Bestimmungszweck (auf die nachfolgende Anwendung) abgestimmte matrixbildende Komponente eingesetzt.

Die Synthesemethoden der Lumineszenzwerkstoffe mit Submikron-Partikelgrößen sind in der Fachliteratur ausführlich beschrieben (1. L.E. Shea, J.Mc. Kittrick, O.A. Lopez, E. Sluzky. Advantages of self-propagating combustion reactions for synthesis of oxide phosphors. // Journal of SID, 5/2. - 1997 - 117-125; 2. L.E. Shea, J. Mc. Kittrik, O.A. Lopez. Sznthesis of red-emitting small particle size luminescent oxides.// J. Am. Ceram. Soc. - 1996. - v. 79, Nr. 12 - p. 3257; 3. Zhang Wei-ping, Yin Min Manufacturing and properties nano-particles of luminescent materials activated by RE elements// Chin. J. Luminescence. - 2000. -21, Nr. 4. - p. 314-319; 4. V.A. Vorobyov, E.G. Morozov, V.Ya. Viktyuk. Die Anwendung von Brennverfahren zur Synthese von Luminophor Y203-Eu mit Submikron-Partikelgröße. Sammelwerke von ZAO NPF "Luminophor", 43. Ausgabe, Stavropol, 1999, S. 78-88).

Es sind auch Verfahren zur Herstellung von Koordinationsverbindungen von Europium, Samarium, Terbium und Gadolinium bekannt, welche im Aufsatz von L.R. Melby, N.J. Rose, E. Abramson, J.C. Caris. "Synthesis and Fluorescence of some Trivalent Lanthanide Complexes". J. Amer. Chem. Soc., 1964, v. 86, Nr. 23, S. 5117, beschrieben sind.

Die Herstellung von jeweiligen Kompositverbindungen - Luminophoren wird anhand von folgenden Beispielen beschrieben:

Beispiel 1

Yttrium- und Europiumoxide, Harnstoff, Thioharnstoff im Molverhältnis von 1:0,04:8:0,5 werden in Salpetersäure aufgelöst. Danach wird die Lösung in einen Quarztiegel eingefüllt und bis zu einer Temperatur von 500-800°C (Verbrennungsreaktion) erhitzt. Der nach der Verbrennungsreaktion erhaltene Lumineszenzstoff (Zwischenprodukt) wird mit einer Sulfidierungsmischung folgender Zusammensetzung vermischt: Schwefel 25%, Kaliumcarbonat 20% auf das Zwischenprodukt bezogen. Dieser Ansatz wird in einen Glaskohle-Tiegel gesetzt. Der Tiegel wird seinerseits in die feuerfeste Küvette gestellt. Der Tiegel wird mit einem Deckel geschlossen. Die Küvette wird mit Kohlen der Marke BAU gefüllt. Danach wird die Küvette zugedeckt, in den Ofen gesetzt und bei einer Temperatur von 1100-1250°C zwei bis drei Stunden erhitzt. Der abgekühlte Luminophor wird mit Wasser und Mineralsäure gewaschen. Die Oberfläche des Luminophors wird mit Zinksilikat modifiziert. Die Zusammensetzung des Lumineszenzstoffes entspricht der Formel $(Y_{0,96}Eu_{0,04})_2O_2S$. Die Durchschnittsgröße der Luminophorpartikeln beträgt 500 nm. Die Leuchthelligkeit (bei $\lambda_{Erreg}$= 313 nm) beträgt 104% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01% Gew. eingeführt. Der Fotoumformungsfaktor der UV-Strahlung der auf solche Weise hergestellten Folie für Treibhäuser ist fünfmal so hoch wie der des Vergleichsprodukts, einer Folie, die unter Anwendung des Großkornluminophors hergestellt wurde.

Beispiel 2

Yttrium- und Europiumoxide, Harnstoff, Thioharnstoff im Molverhältnis von 1:0,04:8:0,5 werden in Salpetersäure aufgelöst. Danach wird die Lösung in einen Quarztiegel eingefüllt und bis zu einer Temperatur von 500-800°C erhitzt (Verbrennungsreaktion). Der nach der Verbrennungsreaktion erhaltene Lumineszenzstoff (Zwischenprodukt) wird mit einer Sulfidierungsmischung folgender Zusammensetzung vermischt: Schwefel 25%, Kaliumcarbonat 20% auf das Zwischenprodukt bezogen. Der Ansatz wird in einen Glaskohle-Tiegel gesetzt. Der Tiegel wird seinerseits in eine feuerfeste Küvette gestellt. Der Tiegel wird mit einem Deckel geschlossen. Die Küvette wird mit Kohlen der Marke BAU gefüllt. Danach wird die Küvette zugedeckt, in den Ofen gesetzt und bei einer Temperatur von 1100-1250°C zwei bis drei Stunden erhitzt. Der abgekühlte Luminophor wird mit Wasser und Mineralsäure gewaschen. Die Oberfläche des Luminophors wird mit Zinksilikat modifiziert. Die Zusammensetzung des Lumineszenzstoffes entspricht der Formel $(Y_{0,96}Eu_{0,04})_2O_2S$. Die Durchschnittsgröße der Luminophorpartikeln beträgt 100 nm. Die Leuchthelligkeit (bei $\lambda_{Erreg}$ = 313 nm) beträgt 104% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,001 Gew.% eingeführt. Der Fotoumformungsfaktor der UV-Strahlung der auf solche Weise hergestellten Folie für Treibhäuser ist dreimal so hoch wie der des Vergleichsprodukts, der unter Anwendung des Großkornluminophors hergestellten Folie. Der Luminophorverbrauch ist um das Zehnfache geringer als bei der Verwendung des grobkörnigen Vergleichsstoffs.

Beispiel 3

Yttrium- und Europiumoxide, Harnstoff im Molverhältnis von 1:0,08:8,0 werden in Salpetersäure aufgelöst. Danach wird die Lösung in einen Quarztiegel eingefüllt und bis zu einer Temperatur von 500-800°C erhitzt (Verbrennungsreaktion). Der nach der Verbrennungsreaktion erhaltene Lumineszenzstoff (Zwischenprodukt) Yttrium- und Europiumoxid wird mit Borsäure im Molverhältnis von 1 : 1,1 vermischt. Der daraus resultierende Ansatz wird in einen Quarztiegel gesetzt und im Kammerofen bei 1250°C innerhalb von 1,5 Stunden erhitzt. Der abgekühlte Luminophor wird mit Wasser gewaschen. Seine Oberfläche wird mit Magnesiumsilikat modifiziert. Die Zusammensetzung des Lumineszenzstoffes entspricht der Formel $(Y_{0,92}Eu_{0,08})BO_3$. Die Durchschnittsgröße der Luminophorpartikeln beträgt 300 nm. Die Leuchthelligkeit (bei $\lambda_{Erreg}$ = 254 nm) beträgt 100% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,001 Gew.% eingeführt. Der Fotoumformungsfaktor der UV-Strahlung der auf solche Weise hergestellten Folie für Treibhäuser ist sechsmal so hoch wie der des Vergleichsprodukts, der unter Anwendung des Großkornluminophors hergestellten Folie. Der Luminophorverbrauch ist um das Zehnfache geringer als bei der Verwendung des grobkörnigen Vergleichsstoffs.

Beispiel 4

Yttrium- und Europiumoxide, Harnstoff im Molverhältnis von 1:0,08:8,0 werden in Salpetersäure aufgelöst. Danach wird die Lösung in einen Quarztiegel eingefüllt und bis zu einer Temperatur von 500-800°C erhitzt (Verbrennungsreaktion). Der nach der Verbrennungsreaktion erhaltene Lumineszenzstoff (Zwischenprodukt) Yttrium- und Europiumoxid wird mit Borsäure im Molverhältnis von 1:1,1 vermischt. Der daraus resultierende Ansatz wird in einen Quarztiegel gesetzt und im Kammerofen bei 1250°C innerhalb von 1,5 Stunden erhitzt. Der abgekühlte Luminophor wird mit Wasser gewaschen. Seine Oberfläche wird mit Magnesiumsilikat modifiziert. Die Zusammensetzung des Lumineszenzstoffs entspricht der Formel $(Y_{0,92}Eu_{0,08})BO_3$. Die Durchschnittsgröße der Luminophorpartikeln beträgt 800 nm. Die Leuchthelligkeit (bei $\lambda_{Erreg}$ = 254 nm) beträgt 100% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Folie für Treibhäuser ist um das Vierfache höher als der des Vergleichsprodukts, der unter Anwendung des Großkornluminophors hergestellten Folie. Der Luminophorverbrauch entspricht dem Verbrauch bei der Verwendung des grobkörnigen Vergleichsstoffs.

Beispiel 5

Yttrium-, Aluminium-, Zer- und Europiumoxide, Harnstoff im Molverhältnis von 2,9:5,1:0,003:0,097:10,0 werden in Salpetersäure aufgelöst. Danach wird die Lösung in einen Quarztiegel eingefüllt und bis zu einer Temperatur von 500-800°C erhitzt (Verbrennungsreaktion). Infolge der Verbrennungsreaktion wird das Zwischenprodukt, der Lumineszenzstoff Ton-Yttergranat, aktiviert mittels Ceriums und Europiums, erzeugt. Dieser Lumineszenzstoff wird in einen Tiegel aus Aluminiumoxid gesetzt und im Kammerofen bei 1550°C 15 Stunden erhitzt. Der abgekühlte Luminophor wird mit Wasser gewaschen, und seine Oberfläche wird mit Yttriumsilikat modifiziert. Die Zusammensetzung des Lumineszenzstoffs entspricht der Formel $(Y_{0,9}Ce_{0,001}Eu_{0,033})_3Al_5O_{12}$. Die Durchschnittsgröße der Luminophorpartikeln beträgt 800 nm. Die Leuchthelligkeit (bei $\lambda_{Erreg}$ = 454 nm) beträgt 96% in Bezug auf die Leuchthelligkeit des makrokristallinen Vergleichsprodukts. Der hergestellte Lumineszenzstoff wird in das matrixbildende Material, das poröse Carbonat, in einer Konzentration von 0,01 Gew.% eingeführt. Der Fotoumformungsfaktor der UV-Strahlung der auf solche Weise hergestellten Verkleidung für Treibhäuser ist 6,0 mal so hoch wie der des Vergleichserzeugnisses, der Verkleidung, welche unter Anwendung von großkörnigem Luminophor produziert wurde. Der Luminophorverbrauch entspricht dem Verbrauch bei der Verwendung des grobkörnigen Vergleichsstoffs.

Beispiel 6

Die Lösungen von Titan-, Strontium-, Calcium- und Praseodymchloriden werden mit Ammoniumhydroxid im Molverhältnis 1,05:0,498:0,05:0,002:2,5 vermengt. Der Niederschlag wird mit Wasser bis pH = 7,0-8,0 gewaschen, getrocknet und in einen Siliciumcarbidtiegel gesetzt. Danach wird er im Kammerofen bei einer Temperatur von 1300°C erhitzt. Nach Abkühlung wird der Luminophor mit Wasser gewaschen. Auf seine Oberfläche wird der modifizierende Überzug Magnesiumsilikat aufgetragen. Die Zusammensetzung des Lumineszenzstoffs entspricht der Formel $(Sr_{0,5}Ca_{0,498}Pr_{0,002})TiO3$. Die Durchschnittsgröße der Luminophorpartikeln beträgt 500 nm. Die Leuchthelligkeit (bei $\lambda_{Erreg}$ = 365 nm) beträgt 96% in Bezug auf die Leuchthelligkeit des makrokristallinen Vergleichsprodukts. Der hergestellte Lumineszenzstoff wird in das matrixbildende Material, das poröse Carbonat, in einer Konzentration von 0,01 Gew.% eingeführt. Der Fotoumformungsfaktor der UV-Strahlung der auf solche Weise hergestellten Verkleidung für Treibhäuser ist fünfmal so hoch wie der des Vergleichsprodukts, der Verkleidung, welche unter Anwendung von großkörnigem Luminophor produziert wurde. Der Luminophorverbrauch entspricht dem Verbrauch bei der Verwendung des grobkörnigen Vergleichsstoffs.

Beispiel 7

Die Lösungen von Calcium-, Strontium-, Europium- und Thioharnstoffnitraten im Molverhältnis von 0,49:0,49:0,02:2,0 werden im Quarztiegel vermengt und bis auf 450°C erhitzt. Infolge der Reaktion werden Calcium-, Strontium-, Europiumsulfide erzeugt. Das daraus resultierende Zwischenprodukt wird im Rohrofen im Schwefelwasserstoff bei 900°C erhitzt. Nach der Abkühlung wird der Luminophor mit Ethanol gewaschen. Auf seine Oberfläche wird der modifizierende Überzug Magnesiumsilikat aufgetragen. Die Zusammensetzung des Lumineszenzstoffs entspricht der Formel $(Sr_{0,49}Ca_{0,49}EU_{0,02})S$. Die Durchschnittsgröße der Luminophorpartikeln beträgt 600 nm. Die Leuchthelligkeit (bei $\lambda_{Erreg}$ = 365 nm) beträgt 99% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Verkleidung für Treibhäuser ist siebenmal so hoch wie der des Vergleichsprodukts, der Verekleidung, welche unter Anwendung von großkörnigem Luminophor produziert wurde. Der Luminophorverbrauch entspricht dem Verbrauch bei der Verwendung des grobkörnigen Vergleichsstoffs.

Beispiel 8

Die Lösungen von Zinknitrat und Carbamid im Molverhältnis von 1,0:1,5 werden im Quarztiegel vermengt und bis auf 950°C im Kammerofen bei begrenztem Luftzutritt 2 Stunden erhitzt. Nach Abkühlung wird der Luminophor mit Wasser gewaschen. Auf seine Oberfläche wird der modifizierende Überzug Siliciumdioxid aufgetragen. Die Zusammensetzung des Lumineszenzstoffs entspricht der Formel ZnO:Zn. Die Durchschnittsgröße der Luminophorpartikeln beträgt 200 nm. Die Leuchthelligkeit (bei $\lambda_{Erreg}$ = 365 nm) beträgt 96% in Bezug auf die Leuchthelligkeit des makrokristallinen Vergleichsprodukts. Der hergestellte Lumineszenzstoff wird in das matrixbildende Material, das poröse Carbonat, in einer Konzentration von 0,001 Gew.% eingeführt. Der Fotoumformungsfaktor der UV-Strahlung der auf solche Weise hergestellten Verkleidung für Treibhäuser ist zweimal so hoch wie der des Vergleichsprodukts, der Verkleidung, welche unter Anwendung von großkörnigem Luminophor produziert wurde. Der Luminophorverbrauch ist um das Zehnfache geringer als bei der Verwendung des grobkörnigen Vergleichsstoffs.

Beispiel 9

Die Lösungen von Lanthan-, Erbium-, Ytterbiumnitraten und Carbamid im Molverhältnis von 0,7:012:0,18:2,0 werden im Quarztiegel vermengt und bis auf 650°C erhitzt. Bei der Verbrennungsreaktion werden Oxide der Seltenerdmetalle mit einer durchschnittlichen Partikelgröße von 0,7 μm (Zwischenprodukt) erzeugt. Sie werden mit einer Sulfidierungsmischung mit folgender Zusammensetzung vermischt: Schwefel 25%, Kaliumcarbonat 20% auf Zwischenprodukt bezogen. Der Ansatz wird in den Glaskohle-Tiegel gesetzt. Der Tiegel wird seinerseits in die feuerfeste Küvette gestellt. Der Tiegel wird mit einem Deckel geschlossen. Die Küvette wird mit Kohlen der Marke BAU gefüllt. Danach wird die Küvette zugedeckt, in den Ofen gesetzt und bei einer Temperatur von 1100-1250°C zwei bis drei Stunden erhitzt. Der abgekühlte Luminophor wird mit Wasser und Mineralsäure gewaschen. Die Oberfläche des Luminophor wird mit Zinksilikat modifiziert. Die Zusammensetzung des Lumineszenzstoffs entspricht der Formel $(La_{0,7}Er_{0,12}Yb_{0,18})_2O_2S$. Die Durchschnittsgröße der Luminophorpartikeln beträgt 860 nm. Die Leuchthelligkeit (bei $\lambda_{Erreg}$ = 860 nm) beträgt 94% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Folie für Treibhäuser ist fünfmal so hoch wie der des Vergleichsprodukts, der unter Anwendung des Großkornluminophors hergestellten Folie.

Beispiel 10

Indium- und Europiumoxide, Harnstoff im Molverhältnis von 1:0,08:8,0 werden in Salpetersäure aufgelöst. Danach wird die Lösung in den Quarztiegel eingefüllt und bis auf eine Temperatur von 500-800°C erhitzt (Verbrennungsreaktion). Der nach der Verbrennungsreaktion erhaltene Lumineszenzstoff Yttrium- und Europiumoxid (Zwischenprodukt) wird mit Borsäure im Molverhältnis von 1: 1,1 vermischt. Der daraus resultierende Ansatz wird in den Quarztiegel gesetzt und im Kammerofen bei 1250°C 1,5 Stunden erhitzt. Der abgekühlte Luminophor wird mit Wasser gewaschen. Seine Oberfläche wird mit Magnesiumsilikat modifiziert. Die Zusammensetzung des Lumineszenzstoffs entspricht der Formel $(In_{0,92}Eu_{0,08})BO_3$. Die Durchschnittsgröße der Luminophorpartikeln beträgt 500 nm. Die Leuchthelligkeit (bei $\lambda_{Erreg}$ = 254 nm) beträgt 100% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew. % eingeführt. Der Fotoumformungsfaktor der UV-Strahlung der auf solche Weise hergestellten Folie für Treibhäuser ist um das Vierfache höher als der des Vergleichsprodukts, der unter Anwendung des Großkornluminophors hergestellten Folie. Der Luminophorverbrauch entspricht dem Verbrauch bei der Verwendung des grobkörnigen Vergleichsstoffs.

Beispiel 11

Yttrium- und Terbiumoxide, Harnstoff im Molverhältnis von 1:0,08:8,0 werden in Salpetersäure aufgelöst. Danach wird die Lösung in den Quarztiegel eingefüllt und bei einer Temperatur von 500-800°C erhitzt (Verbrennungsreaktion). Der nach der Verbrennungsreaktion erhaltene Lumineszenzstoff (Zwischenprodukt) Yttrium- und Europiumoxid wird mit Borsäure im Molverhältnis von 1:1,1 vermischt. Der daraus resultierende Ansatz wird in den Quarztiegel gesetzt und im Kammerofen bei 1250°C 1,5 Stunden erhitzt. Der abgekühlte Luminophor wird mit Wasser gewaschen. Seine Oberfläche wird mit Magnesiumsilikat modifiziert. Die Zusammensetzung des Lumineszenzstoffs entspricht der Formel $(Y_{0,92}Tb_{0,08})BO_3$. Die Durchschnittsgröße der Luminophorpartikeln beträgt 500 nm. Die Leuchthelligkeit (bei $\lambda_{Erreg}$ =

254 nm) beträgt 100% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Folie für Treibhäuser ist um das Vierfache höher als der des Vergleichsprodukts, der unter Anwendung des Großkornluminophors hergestellten Folie. Der Luminophorverbrauch entspricht dem Verbrauch bei der Verwendung des grobkörnigen Vergleichsstoffs.

Beispiel 12

Die Gadolinium- und Terbiumoxide, Harnstoff, Thioharnstoff im Molverhältnis von 1:0,04:8:0,5 werden in Salpetersäure aufgelöst. Danach wird die Lösung in den Quarztiegel eingefüllt und bis zu einer Temperatur von 500-800°C erhitzt (Verbrennungsreaktion). Der nach der Verbrennungsreaktion erhaltene Lumineszenzstoff (Zwischenprodukt) wird mit einer Sulfidierungsmischung mit folgender Zusammensetzung vermischt: Schwefel 25%, Kaliumcarbonat 20% auf das Zwischenprodukt bezogen. Der Ansatz wird in den Glaskohle-Tiegel gesetzt. Der Tiegel wird seinerseits in die feuerfeste Küvette gestellt. Der Tiegel wird mit einem Deckel geschlossent. Die Küvette wird mit Kohlen der Marke BAU gefüllt. Danach wird die Küvette zugedeckt, in den Ofen gesetzt und bei einerTemperatur von 1100-1250°C zwei bis drei Stunden erhitzt. Der abgekühlte Luminophor wird mit Wasser und Mineralsäure gewaschen. Die Oberfläche des Luminophors wird mit Zinksilikat modifiziert. Die Zusammensetzung des Lumineszenzstoffs entspricht der Formel $(Gd_{0,96}Tb_{0,04})_2O_2S$. Die Durchschnittsgröße der Luminophorpartikeln beträgt 800 nm. Die Leuchthelligkeit (bei $\lambda_{Erreg}$ = 313 nm) beträgt 104% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,001 Gew.% eingeführt. Der Fotoumformungsfaktor der UV-Strahlung der auf solche Weise hergestellten Folie für Treibhäuser ist 1,03 mal so hoch wie der des Vergleichsprodukts, der unter Anwendung des Großkornluminophors hergestellten Folie. Der Luminophorverbrauch ist um das Zehnfache geringer als bei der Verwendung des grobkörnigen Vergleichsstoffs.

Beispiel 13

Die Lösungen von Barium-, Strontium- und Ceriumnitraten und Thioharnstoff im Molverhältnis von 0,49:0,49:0,02:2,0 werden im Quarztiegel vermengt und bis auf 450°C erhitzt. Infolge dieser Reaktion werden Calzium-, Strontium-, Europiumsulfide erzeugt. Dieses Zwischenprodukt wird im Rohrofen im Schwefelwasserstoff bei 900°C erhitzt. Nach der Abkühlung wird der Luminophor mit Ethanol gewaschen. Auf seine Oberfläche wird der modifizierende Überzug Magnesiumsilikat aufgetragen. Die Zusammensetzung des Lumineszenzstoffs entspricht der Formel $(Ba_{0,49}C_{0,49}Ce_{0,02})S$. Die Durchschnittsgröße der Luminophorpartikeln beträgt 600 nm. Die Leuchthelligkeit (bei $\lambda_{Erreg}$ = 365 nm) beträgt 99% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Verkleidung für Treibhäuser ist siebenmal so hoch wie der des Vergleichsprodukts, der Verkleidung, welche unter Anwendung von großkörnigem Luminophor produziert wurde. Der Luminophorverbrauch entspricht dem Verbrauch bei der Verwendung des grobkörnigen Vergleichsstoffs.

Beispiel 14

Die Lösungen der Yttrium- und Europiumnitrate und Carbamid werden im Molverhältnis von 0,92:0,08:1,05 im Quarztiegel vermischt und bis 350°C erhitzt. Infolge der Reaktion werden Yttrium- und Europiumoxide mit einer Partikelgröße von 400 nm hergestellt. Das hergestellte Gemisch wird bis auf 1250°C erhitzt und bei dieser Temperatur innerhalb von 6 Stunden gehalten. Nach der Abkühlung wird der Luminophor mit Ethanol gewaschen. Auf seine Oberfläche wird der modifizierende Überzug Magnesiumsilikat aufgetragen. Die Zusammensetzung des Lumineszenzstoffs entspricht der Formel $(Y_{0,92}Eua_{0,08})_2O_3$. Die Durchschnittsgröße der Luminophorpartikeln beträgt 400 nm. Die Leuchthelligkeit (bei $\lambda_{Erreg}$ = 365 nm) beträgt 99% in Bezug auf die Leuchthelligkeit des makrokristallinen Vergleichsprodukts. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Verkleidung für Treibhäuser ist siebenmal so hoch wie der des Vergleichsprodukts, der Verkleidung, welche unter Anwendung von großkörnigem Luminophor produziert wurde. Der Luminophorverbrauch entspricht dem Verbrauch bei der Verwendung des grobkörnigen Vergleichsstoffs.

Beispiel 15

Die Lösungen von Calcium-, Strontium-, Aluminium-, Europium-, Dysprosiumnitraten und Carbamid im Molverhältnis von 0,49:0,49:2,0:0,01:0,01:2,0 werden im Quarztiegel vermengt und bis auf 450°C erhitzt. Infolge der Reaktion werden Calcium-, Strontium-, Europium, Dysprosiumaluminate mit Partikelgröße von 100 nm produziert. Dieses Zwischenprodukt wird im Rohrofen unter Kohlendioxid bei 1350°C erhitzt. Nach der Abkühlung des Luminophors wird auf seine Oberfläche der modifizierende Überzug Magnesiumsilikat aufgetragen. Die Zusammensetzung des Lumineszenzstoffs entspricht der Formel $(Sr_{0,49}Ca_{0,49}Eu_{0,01}Dy_{0,01})Al_2O_4$. Die Durchschnittsgröße der Luminophorpartikeln beträgt 600 nm. Die Leuchthelligkeit (bei $\lambda_{Erreg}$ = 365 nm) beträgt 99% in Bezug auf die Leuchthelligkeit des makrokristallinen Vergleichsprodukts. Der resultierende Lumineszenzstoff weist eine Phosphoreszenzdauer von über 8 Stunden auf. Der hergestellte Lumineszenzstoff wird in das matrixbildende Material Klarlack auf Wasserbasis in einer Konzentration von 10,0 Gew.% eingeführt. Der Fotoumformungsfaktor der UV-Strahlung des auf solche Weise hergestellten Anstrichs ist siebenmal so hoch wie der des Vergleichsprodukts, der Bekleidung, welche unter Anwendung von großkörnigem Luminophor produziert wurde. Der Luminophorverbrauch entspricht dem Verbrauch bei der Verwendung des grobkörnigen Vergleichsstoffs. Das Leuchten des Materials ohne Außenaufhellung wird 8 Stunden lang aufrechterhalten.

Beispiel 16

Yttrium- und Europiumoxide, Harnstoff, Thioharnstoff im Molverhältnis von 1:0,04:8:0,5 werden in Salpetersäure aufgelöst. Danach wird die Lösung in den Quarztiegel eingefüllt und bis zu einer Temperatur von 500-800°C erhitzt (Verbrennungsreaktion). Die daraus resultierenden Oxide werden durch Wasserlösungen von Magnesiumchlorid in einer Menge von 5 Mol.% in Bezug auf Magnesiumion und 2 Mol.% Titandioxid mit einer Partikelgröße von 10 nm ergänzt. Der Ansatz wird bei 100°C getrocknet und mit einer Sulfidierungsmischung folgender Zusammensetzung vermischt: Schwefel 25%, Kaliumcarbonat 20% auf das Zwischenprodukt bezogen. Der Ansatz wird in den Glaskohle-Tiegel gesetzt. Der Tiegel wird seinerseits in die feuerfeste Küvette gestellt. Der Tiegel wird mit einem Deckel geschlossen. Die Küvette wird mit Kohlen der Marke BAU gefüllt. Danach wird die Küvette zugedeckt, in den Ofen gesetzt und bei einer Temperatur von 1100-1250°C zwei bis drei Stunden erhitzt. Der abgekühlte Luminophor wird mit Wasser und Mineralsäure gewaschen. Die Oberfläche des Luminophors wird mit Zinksilikat modifiziert. Die Zusammensetzung des Lumineszenzstoffs entspricht der Formel $(Y_{0,96}Eu_{0,04}Mg_{0,05}Ti_{0,02})_2O_2S$. Die Durchschnittsgröße der Luminophorpartikeln beträgt 500 nm. Die Leuchthelligkeit (bei $\lambda_{Erreg}$ = 313 nm) beträgt 104% in Bezug auf die Leuchthelligkeit des makrokristallinen Vergleichsprodukts. Der zusätzliche Vorteil von Luminophor besteht darin, dass seine Phosphoreszenzdauer 8 Stunden beträgt. Der hergestellte Lumineszenzstoff wird in das matrixbildende Material Hochdruckpolyethylen in einer Konzentration von 0,01 Gew.% eingeführt. Der Fotoumformungsfaktor der UV-Strahlung der auf solche Weise hergestellten Folie für Treibhäuser ist fünfmal so hoch wie der des Vergleichsprodukts, der unter Anwendung des Großkornluminophors hergestellten Folie. Nach dem Ende der Außenbelichtung leuchtet das Material noch 8 Stunden lang.

In den Beispielen 1 bis 16 wurde die Synthese von Luminophoren beschrieben, welche für die Großproduktion leicht verfügbar sind.

Die vorgeschlagenen Koordinationsverbindungen von Europium, Samarium, Terbium und Gadolinium wurden mittels Behandlung ihrer Nitrate mit entsprechenden Säuren und Basen im Alkoholwassermedium unter 80-90°C hergestellt. Das wird anhand der Beispiele 17 bis 18 veranschaulicht.

Beispiel 17

4,46 g Europiumnitrat (III) wurden in 50 ml Ethanol unter Erhitzen aufgelöst. Die resultierende Lösung wurde mit 8,89 g Thenoyltrifluoroacetonat in 10 ml Ethanol und danach mit 8,44 g Diphenylguanidin in 15 ml Ethanol ergänzt. Die Lösung wurde abgekühlt. Der Niederschlag wurde ausgefiltert. Das Filtrat wurde zur ungehinderten Verdunstung stehen gelassen.

Im Endeffekt wird eine amorph-kristalline Masse gebildet, deren Zusammensetzung der Formel (DPhG)H[Eu(TTA)$_4$] entspricht.

Beispiel 18

4,46 g Europiumnitrat (III) wurden in 50 ml Heißwasser aufgelöst. Die resultierende Lösung wurde mit 3,4 g 1,10-Phenanthrolin in 10 ml Ethanol ergänzt. Es bildete sich sofort ein kristalliner Niederschlag. Die Lösung wurde abgekühlt. Der Niederschlag wurde auf dem Porenglasfilter ausgefiltert, zuerst mit Kaltwasser und danach mit Ethanol und Ether gespült.

Die Zusammensetzung der hergestellten Verbindung entspricht der Formel $[Eu(NO_3)_a(Phen)_2]$.

Es wird ein Verfahren zur Herstellung von lichtumsetzendem Material vorgeschlagen, welches eine Matrix und einen aktiven Zusatzstoff enthält. Die Matrix dieses Materials ist dabei als eine Folie oder eine Platte aus Thermoplast oder aus löslichem Harz ausgebildet. Dieses Verfahren unterscheidet sich nicht vom Verfahren zur Herstellung von Polymerfilmen oder Platten, welches zum Beispiel in CH 667463, GB 2158833 beschrieben ist.

Beispiel 19

Zur Herstellung von lichttransformierendem Material wird eine Zusammensetzung zubereitet, welche als matrixbildende Komponente 99,97 Gew.% teilchenförmiges Hochdruckpolyethylen, 0,02 Gew.% der Kompositverbindung mit der Zusammensetzung $Y_{1,9}Eu_{0,1}(VO_4)_{1,5}(PO_4)_{0,5}$ als staubfeines Pulver mit durchschnittlicher disperser Zusammensetzung von 500 nm und 0,01 Gew.% der Koordinationsverbindung $[Eu(NO_3)_3(Phen)_2]$ enthält.

Diese Zusammensetzung kommt in den Mischer, wird dort gründlich vermischt und mittels Extruderwerkzeugs zu einer Folie mit einer Stärke von 100-200 $\mu$m verarbeitet.

Das hergestellte Material enthält eine Matrix und einen aktiven Zusatzstoff - 0,02 Gew.% des genannten Yttrium-Europium-Vanadat-Phosphats und 0,01 Gew.% der Koordinationsverbindung. Der aktive Zusatzstoff ist in der Matrix verteilt. Die Matrix ist in Form von Folie ausgeführt. Ein solches Material in Form von durchsichtiger Folie kann zur Abdeckung von Treibhäusern und Frühbeeten verwendet werden. Der Lichtumsetzungsfaktor des hergestellten Materials war sechsmal höher als bei der Verwendung des grobkörnigen Vergleichsstoffs.

Beispiel 20

Zur Herstellung von lichttransformierendem Material wird eine Zusammensetzung mit folgenden Bestandteilen zubereitet: als matrixbildende Komponente 99,998 Gew.%. des teilchenförmigen Polyethylens, 0,001 Gew.% der Koordinationsverbindung $(DPhG)H[Eu(TTA)_4]$ und 0,001 Gew.% des anorganischen Luminophors mit der Zusammensetzung $(Y_{0,96}Eu_{0,04})_2O_2S$. Die Durchschnittsgröße der Luminophorpartikeln beträgt 100 nm. Diese Zusammensetzung kommt in den Mischer, wird dort gründlich vermengt und mittels Extruderwerkzeugs in eine Folie mit einer Stärke von 100-200 $\mu$m verarbeitet.

Das hergestellte Material enthält eine Matrix und einen aktiven Zusatzstoff - 0,001 Gew.% Luminophor - Yttrium-Europium-Oxisulfids und 0,001 Gew.% der Koordinationsverbindung $(DPhG)H[Eu(TTA)_4]$. Der aktive Zusatzstoff ist in der Matrix verteilt. Die Matrix ist als eine Folie ausgebildet. Der Luminophorverbrauch ist siebenmal kleiner als bei der Verwendung des grobkörnigen Vergleichsstoffs.

Beispiel 21

Zur Herstellung von lichttransformierendem Material, welches eine Matrix in Form von Polypropylen-Faservlies und einen aktiven Zusatzstoff enthält, wurden 0,001 Gew.% der Koordinationsverbindung $(DPhG)H[Eu(TTA)_4]$ und Luminophor $Y_{1,9}Eu_{0,1}O_2S_1$ mit einer Partikelgröße von 700 nm in einer Menge von 0,001 Gew.% und 99,998 Gew.% Polypropylengranulat verwendet. Die Bahn wurde nach konventionellem Verfahren hergestellt. Der Verbrauch von aktivem Zusatzstoff Luminophor ist zehnfach kleiner als beim Vergleichserzeugnis, wobei der Lichtumsetzungsfaktor erhalten wird.

Beispiel 22

Zur Herstellung von lichttransformierendem Material wurden 99,97 Gew.% der bekannten Zusammensetzung für die Erzeugung von Borosilikatglas genommen. Dabei enthielt das lichttransformierende Material eine Matrix in Form von Platte, die zum Beispiel aus Borosilikatglas ausgebildet wurde. In diese bekannte Zusammensetzung wurden 0,02 Gew.% Luminophor $Y_{1,9}Eu_{0,1}(BO_3)(PO_4)$ mit Partikelgröße von 700 nm und 0,01 Gew.% der Koordinationsverbindung $[Eu(NO_3)_3(Phen)_2]$ eingeführt. Die resultierende Masse wurde in den Mischer beschickt, gründlich vermengt, bis Temperatur von 1000°C erhitzt und wie gewöhnlich Glasplatten geformt. Der Lichtumsetzungsfaktor des hergestellten Materials ist fünfmal höher als der bei der Verwendung des grobkörnigen Vergleichsstoffes.

Beispiel 23

Zur Herstellung von lichttransformierendem Material wird eine Zusammensetzung zubereitet, die als matrixbildende Komponente 99,997 Gew.% des porigen Karbamids und 0,003 Gew.% der Kompositverbindung enthält. Die Kompositverbindung enthält 0,001 Gew.% der Koordinationsverbindung $[Eu(NO_3)_3(Phen)_2]$ und 0,002 Gew.% Luminophor mit der Zusammensetzung $(Sr_{0,5}Ca_{0,498}Pr_{0,002})TiO_3$. Die Durchschnittsgröße der Luminophorpartikeln beträgt 400 nm.

Diese Zusammensetzung kommt in den Mischer und wird dort gründlich vermengt. Das porige Carbamid wird nach dem konventionellen Verfahren hergestellt. Das hergestellte Material enthält eine Matrix und einen aktiven Zusatzstoff in der Menge von 0,003 Gew.%, darunter 0,001 Gew.% der Koordinationsverbindung $[Eu(NO_3)_3(Phen)_2]$ und 0,002 Gew.% Strontium-Calcium-Metatitanat, aktiviert mittels Praseodyms. Der aktive Zusatzstoff ist in der Matrix verteilt, welche blockweise ausgebildet ist. Der Luminophorverbrauch ist zehnmal kleiner als bei der Verwendung des grobkörnigen Vergleichsstoffs, wobei der Lichtumsetzungsfaktor aufrechterhalten wird.

Beispiel 24

Zur Herstellung von lichttransformierendem Sonnenschutzmaterial wird eine Zusammensetzung zubereitet, die als matrixbildende Komponente 95,0 Gew.% die kosmetische Zusammensetzung und 5,0 Gew.% Luminophor $Y_{1,9}Eu_{0,1}O_2S_1$ mit einer Partikelgröße von 100 nm enthält. Die kosmetische Zusammensetzung ist für die lokale Anwendung in Form von geeigneten sowohl flüssigen (wie Gele, Emulsionen, Schäume und Ähnliches) als auch festen bzw. halbfesten (wie Cremes, Salben, Lippenstifte und Ähnliches) Zusammensetzungen vorgesehen. Die genannten Zusammensetzungen werden nach konventionellen Verfahren hergestellt. Solche Verfahren sind zum Beispiel im Handbuch "Remington's Pharmaceutical Handbook", Mack Publishing Co., NY, USA beschrieben. Dafür werden geeignete Füllstoffe wie etwa weichmachende Mittel, Befeuchtungsmittel, Dickungsmittel, Emulsionsmittel, Farbstoffe, Odorierungsmittel und Ähnliches verwendet. Der aktive Zusatzstoff $Y_{1,9}Eu_{0,1}O_2S_1$ mit einer Partikelgröße von 100 nm ist in der Matrix verteilt. Dieser aktive Zusatzstoff setzt die UV-Strahlung in die orangen-rote Strahlung um. Sie trägt zur Beschleunigung des Wundheilungsverlaufs und darunter auch der Hautregeneration nach Sonnenbrand bei.

Beispiel 25

Zur Herstellung von lichttransformierendem Sonnenschutzmaterial wird eine Zusammensetzung zubereitet, die als matrixbildende Komponente 90,0 Gew.% die kosmetische Zusammensetzung und 10,0 Gew.% Luminophor $Y_{1,9}Eu_{0,1}O_2S_1$ mit einer Partikelgröße von 100 nm enthält. Die kosmetische Zusammensetzung ist für die lokale Anwendung in Form von geeigneten sowohl flüssigen (wie Gele, Emulsionen, Schäume und Ähnliches) als auch festen bzw. halbfesten (wie Cremes, Salben, Lippenstifte und Ähnliches) Zusammensetzungen vorgesehen. Die genannten Zusammensetzungen werden nach konventionellen Verfahren hergestellt. Solche Verfahren sind zum Beispiel im Handbuch "Remington's Pharmaceutical Handbook", Mack Publishing Co., NY, USA beschrieben. Dafür werden geeignete Füllstoffe wie etwa weichmachende Mittel, Befeuchtungsmittel, Dickungsmittel, Emulsionsmittel, Farbstoffe, Odorierungsmittel und Ähnliches verwendet. Der aktive Zusatzstoff $Y_{1,9}Eu_{0,1}O_2S_1$ mit einer Partikelgröße von 100 nm ist in der Matrix verteilt. Dieser aktive Zusatzstoff setzt die UV-Strahlung in die orangen-rote Strahlung um. Sie trägt zur Beschleunigung des Wundheilungsverlaufs und darunter auch der Hautregeneration nach Sonnenbrand bei.

Somit ermöglicht es die vorgeschlagene Erfindung, den Lichtumsetzungsfaktor um das Drei- bis Siebenfache zu erhöhen, wobei die Verbrauchswerte unverändert bleiben, oder umgekehrt die Verbrauchswerte um das Drei- bis Siebenfache im Vergleich zu grobdispersen Vergleichserzeugnissen zu verringern.

Die vorgeschlagene Erfindung ermöglicht es auch, das Sortiment der Werkstoffe zu erweitern, welche für die Herstellung von Erzeugnissen mit lichttransformierenden Eigenschaften geeignet sind.

Die vorgeschlagene Erfindung ermöglicht es, die Intensität der Umsetzung der UV-Strahlung in den roten, blauen und grünen Spektralbereich zu steigern

**Gewerbliche Anwendbarkeit**

Die Anwendungsgebiete der Erfindung umfassen:

- die Landwirtschaft, zum Beispiel als Material zur Abdeckung von Frühbeeten, provisorischen Treibhäusern und Räumen für das Vieh;
- die Medizin, zum Beispiel zur Vorbeugung von Sonnenbränden der menschlichen Haut und/oder zur Beschleunigung ihrer Heilung. Dies erfolgt durch die Möglichkeit, die UV-Strahlungsdosis herabzusetzen und eine zusätzliche Dosis von Rotstrahlung zu bekommen,
- die Leichtindustrie, zum Beispiel zur Herstellung eines Materials in Form von lichttransformierendem Vliesstoff, welches für die Fertigung von Sonnenschutzschirmen, Sonnendächern, Kleidung verwendet wird,
- die Biotechnologie, zum Beispiel zur Entwicklung von Vorrichtungen zur Züchtung von Mikroorganismen und Zellkulturen, wobei die UV-Strahlung in Rotstrahlung umgesetzt wird,
- das Bauwesen - zur Herstellung von lichttransformierendem Glas für die Verglasung der Wohn- und Büroräume, der festen Gewächshäuser und der Räume für die Viehhaltung,
- sowie die Herstellung von lichttransformierenden Brillen und Scheiben für Fahrzeuge.

**Patentansprüche**

1.  Lichtumsetzendes Material, welches eine Matrix und mindestens eine Kompositverbindung von Seltenerdmetallen enthält, wobei die Kompositverbindung die UV-Strahlung in Strahlung eines anderen Spektralbereichs umwandelt und Partikelform aufweist,
**gekennzeichnet dadurch,**
**dass** die Größe der genannten Partikeln im Bereich von 10 nm bis 1000 nm liegt; dabei weisen die genannten Kompositverbindungen folgende allgemeine Formel auf:

$$Me_x^a A_y^b R_z^c \quad \text{bei } ax + by = cz, \; Me_x^a = Me_{x'}^{a'} + Me_{x''}^{a''} + ..., \; A_y^b = A_{y'}^{b'} + A_{y''}^{b''} + ...,$$
$$R_z^c = R_{z'}^{c'} + R_{z''}^{c''} + ..., \; ax = a'x' + a''x'' + ..., \; by = b'y' + b''y'' + ..., \; cz = c'z' + c''z''$$
$$+ ...,$$
$$x \geq 1,0 \geq y \geq 0,0$$

dabei ist Me das Metall, welches aus folgender Gruppe gewählt wird: Yttrium, Lanthan, Cerium, Praseodym, Neodym, Samarium, Europium, Gadolinium, Dysprosium, Holmium, Erbium, Ytterbium, Aluminium, Wismut, Zinn, Titan, Mangan, Calcium, Strontium, Barium, Zink, Cadmium, Natrium, Kalium, Rubidium, Cäsium;
A ist das Metall, welches aus folgender Gruppe gewählt wird: Cerium, Praseodym, Neodym, Samarium, Europium, Gadolinium, Dysprosium, Holmium, Erbium, Ytterbium, Wismut, Zinn, Titan, Mangan, Kupfer, Silber, Gold, Antimon, Magnesium;
R ist das Element, welches aus folgender Gruppe gewählt wird: Sauerstoff, Schwefel, Fluor, Chlor, Brom, Phosphor, Bor, Vanadium, Molybdän, Wolfram, Zinn, Germanium, Zirkonium, Titan, Niob, Tantal, Cerium, Aluminium, Gallium, Indium und/oder ihre Verbindungen miteinander;
a, b und c stehen für die Ladung der jeweiligen Ionen Me, A oder R.

**2.** Material nach Anspruch 1,
**gekennzeichnet dadurch,**
**dass** es je nach der Zusammensetzung der Kompositverbindung die Umsetzung des UV-Lichts in Licht mit einer Wellenlänge im Bereich von 380 bis 960 nm sicherstellt.

**3.** Material nach Anspruch 1,
**gekennzeichnet dadurch,**
**dass** es zusätzlich mindestens eine Koordinationsverbindung von Metall E enthält; die Koordinationsverbindung wird dabei aus folgender Gruppe gewählt:

$[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E_4(AA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$,
dabei ist E das Metall, welches aus folgender Gruppe gewählt wird: Europium, Samarium, Terbium, Gadolinium, H - Wasserstoffion, AA - Acetylacetonat-Anion, BB - Benzoylbenzoat-Anion, Capr - Capronat-Anion, DPhG - Diphenylguanidin, HFAA - Hexafluoracetylacetonat-Anion, Phen - 1,10-Phenanthrolin, Ter - Terephthalat (p-Phthalat)-Anion, TFA - Trifluoracetat-Anion, TPhPO - Triphenylphosphinoxid, TTA - Thenoyltrifluoroacetonat-Anion.

**4.** Material nach Anspruch 3,
**gekennzeichnet dadurch,**
**dass** es als Metall-Koordinationsverbindung E das Behandlungsprodukt des Europium- (III), Samarium- (III), Terbium- (III) oder Gadoliniumnitrats (III) mit Thenoyltrifluoroazeton oder mit Hexafluoracetylaceton oder mit Acetylaceton oder mit Benzoyl-Benzoesäure oder mit Trifluoressigsäure oder mit Capronsäure oder mit p-Phthalsäure und 1,10-Phenanthrolin oder mit Triphenylphosphinoxid oder mit Diphenylguanidin im Alkohol-Wasser-Medium bei 80 - 90°C enthält.

**5.** Material nach Anspruch 1,
**gekennzeichnet dadurch,**
**dass** die Partikeln der Kompositverbindung innerhalb oder auf der Fläche der Matrix verteilt sind.

**6.** Material nach Anspruch 1,
**gekennzeichnet dadurch,**
**dass** es die Kompositverbindung in einer Menge von mindestens 0,0001 Gew.% des Materialgewichts enthält.

**7.** Material nach Anspruch 1,
**gekennzeichnet dadurch,**
**dass** die Matrix lichtdurchsichtig ausgeführt ist.

**8.** Material nach Anspruch 1,
**gekennzeichnet dadurch,**
**dass** es als Kompositverbindung mindestens eine Verbindung enthält bei R - O, Hal mit der Formel $Me_xA_yO_2Hal$,
wo Hal S, Se oder Te ist;
oder bei R - O, Gal mit der Formel $Me_xA_yOGal$, wo Gal F, Cl, I oder Br ist;
oder bei R - $ZrO_3$, $TiO_3$ mit der Formel $Me_xA_y(TiO_3)_{z'}(ZrO_3)_{z''}$;
oder bei R - $(Al_{1-k}Ga_k)_5O_{12}$ mit der Formel $(Me_{3-y}A_y)(Al_{1-k}Ga_k)_5O_{12}$;
oder bei R - $(Al_{1-k}Ga_k)_2O_4$ mit der Formel $(Me_{3-y}A_y)(Al_{1-k}Ga_k)_2O_4$;
oder bei R - $(Al_{1-k}Ga_k)_{14}O_{25}$ mit der Formel $(Me_{3-y}A_y)_4(Al_{1-k}Ga_k)_{14}O_{25}$;
oder bei R - $(Al_{1-k}Ga_k)_{12}O_{19}$ mit der Formel $(Me_{3-y}A_y)(Al_{1-k}Ga_k)_{12}O_{19}$;
oder bei R - $B_2O_3$ mit der Formel $Me_xA_y(B_2O_3)_3$;
oder bei R - $PO_4$, Gal mit der Formel $(Me_xA_y)_{10}(PO_4)_6(Gal)_2$, dabei ist Gal = F, Cl;
oder bei R - Gal mit der Formel $(Me_{x'}{}^{a'} + Me_{x''}{}^{a''})A_yGal_4$, dabei ist Gal = F, Cl, I oder Br;
oder bei R - Gal mit der Formel $Me_xA_yGal$, dabei ist Gal = F, Cl, I oder Br;
oder bei R - $SiO_2$ mit der Formel $(Me_xA_y)_2SiO_4$;
oder bei R - $Si_2O_7$ mit der Formel $Me_xA_ySi_2O_7$;
oder bei R - $SiO_5$ mit der Formel $Me_xA_ySiO_5$;
oder bei R - $Al_2Si_2O_8$ mit der Formel $Me_xA_yAl_2Si_2O_8$;
oder bei R - $CeO_2$ mit der Formel $Me_xA_yCeO_3$;
oder bei R - Hal mit der Formel $Me_xA_yHal$, dabei ist Hal = O, S, Se;
oder bei R - $VO_4$ mit der Formel $Me_xA_y(VO_4)_2$;
oder bei R - $BO_3$, $PO_4$ mit der Formel $Me_xA_y(BO_3)_{z'}(PO_4)_{z''}$;
oder bei R - $VO_4$, $PO_4$ mit der Formel $Me_xA_y(VO_4)_{z'}(PO_4)_{z''}$;
oder bei R - $VO_4$, $PO_4$, $BO_3$ mit der Formel $Me_xA_y(VO_4)_{z'}(PO_4)_{z''}(BO_3)_{z'''}$;
oder bei R - $VO_4$, $NbO_4$, $TaO_4$ mit der Formel $Me_xA_y(VO4)_{z'}(NbO_4)_{z''}(TaO_4)_{z'''}$;
oder bei R - $BO_2$, $WO_4$, $MoO_4$ mit der Formel $Me_xA_y(WO_4)_{z'}(BO_2)_{z''}$ oder $Me_xA_y(MoO_4)_{z'}(BO_2)_{z''}$
oder eine Mischung dieser Verbindungen.

**9.** Material nach Anspruch 1,
**gekennzeichnet dadurch,**
**dass** es eine Matrix enthält, die als eine Folie oder eine Platte oder Textil oder Vliesstoff, oder Fasern oder Lack oder Leim ausgebildet ist.

**10.** Material nach Anspruch 9,
**gekennzeichnet dadurch,**
**dass** die Matrix aus thermoplastischen Harzen ausgebildet ist.

**11.** Material nach Anspruch 9,
**gekennzeichnet dadurch,**
**dass** die Matrix aus löslichen Harzen ausgebildet ist.

**12.** Material nach Anspruch 9,
**gekennzeichnet dadurch,**
**dass** die Matrix aus Makrodiol ausgebildet wird, welches zum Beispiel aus folgender Gruppe gewählt wird: Polymethylmethacrylat, Polybutylmethacrylat, Polycarbonat, Polyethylenterephthalat und ihre Derivate,
**dass** die Matrix aus Polyolefin ausgebildet wird, welches zum Beispiel aus folgender Gruppe gewählt wird: Polypropylen, Polyvinylchlorid (PVC), Polystyrol, Polyethylen und ihre Derivate,
**dass** die Matrix aus Polyamid bzw. seinen Derivaten oder aus Copolymeren dieser Polymere oder aus Mischungen dieser Polymere ausgebildet sein kann.

**13.** Material nach Anspruch 9,
**gekennzeichnet dadurch,**
**dass** die Matrix aus natürlichen Fasern, wie zum Beispiel Baumwolle, Seide, Wolle, Hanf und ihrer Mischung oder aus Kunstfasern, zum Beispiel Viskose, Acetat, Capron, Nylon, Polyamid, Makrodiol, aus ihren Copolymeren, aus ihrer Mischung oder aus Mischfasern oder aus der Mischung von natürlichen und Kunstfasern ausgebildet sein kann.

14. Material nach Anspruch 9,
    **gekennzeichnet dadurch,**
    **dass** die Matrix aus Silikat- bzw. aus modifiziertem Silikatglas ausgebildet wird.

15. Material nach Anspruch 9,
    **gekennzeichnet dadurch,**
    **dass** die Matrix aus siliciumorganischem Harz oder Polyesterharz oder Polyepoxidharz oder Epoxidharz oder ihrer Mischung ausgeführt ist.

16. Material nach Anspruch 9,
    **gekennzeichnet dadurch,**
    **dass** die Matrix aus organischem Glas ausgebildet ist..

17. Material nach Anspruch 1,
    **gekennzeichnet dadurch,**
    **dass** es zusätzlich Lack oder Leim enthält.

18. Material nach Anspruch 17,
    **gekennzeichnet dadurch,**
    **dass** es als Lack oder Leim zum Beispiel siliciumorganisches Harz oder Polyesterharz oder Polyepoxidharz oder Epoxidharz oder ihre Mischung enthält.

19. Zusammensetzung zur Herstellung von lichtumsetzendem Material, welche eine matrixbildende Komponente und Partikeln von mindestens einer Kompositverbindung des Seltenerdmetalls umfasst, wobei diese Kompositverbindung die UV-Strahlung in Strahlung eines anderen Spektralbereichs umsetzt,
    **gekennzeichnet dadurch,**
    **dass** die genannten Partikeln im Größenbereich von 10 nm bis 1000 nm liegen, dabei weist die Kompositverbindung folgende Allgemeinformel auf:

$$Me_x^a\ A_y^b\ R_z^c \text{ bei } ax + by = cz,\ Me_x^a = Me_{x'}^{a'} + Me_{x''}^{a''} + ...,\ A_y^b = A_{y'}^{b'} + A_{y''}^{b''} + ...,$$
$$R_z^c = R_{z'}^{c'} + R_{z''}^{c''} + ...,\ ax = a'x' + a''x'' + ...,\ by = b'y' + b''y'' + ...,\ cz = c'z' + c''z''$$
$$+...,$$
$$x \geq 1, 0 \geq y \geq 0, 0$$

dabei ist Me das Metall, welches aus folgender Gruppe gewählt wird: Yttrium, Lanthan, Cerium, Praseodym, Neodym, Samarium, Europium, Gadolinium, Dysprosium, Holmium, Erbium, Ytterbium, Aluminium, Wismut, Zinn, Titan, Mangan, Calcium, Strontium, Barium, Zink, Kadmium, Natrium, Kalium, Rubidium, Cäsium;
A ist das Metall, welches aus folgender Gruppe gewählt wird: Cerium, Praseodym, Neodym, Samarium, Europium, Gadolinium, Dysprosium, Holmium, Erbium, Ytterbium, Wismut, Zinn, Titan, Mangan, Kupfer, Silber, Gold, Antimon, Magnesium;
R ist das Element, welches aus folgender Gruppe gewählt wird: Sauerstoff, Schwefel, Fluor, Chlor, Brom, Phosphor, Bor, Vanadium, Molybdän, Wolfram, Zinn, Germanium, Zirkonium, Titan, Niob, Tantal, Cerium, Aluminium, Gallium, Indium und/oder ihre Verbindungen miteinander;
a, b und c stehen für die Ladung des jeweiligen Ions Me, A oder R;
**dass** es als matrixbildende Komponente Thermoplast oder lösliche Harze oder natürliche Fasern oder Kunstfasern oder Mischfasern oder eine Zusammensetzung zur Herstellung von organischem Glas oder Silikatglas oder modifiziertem Silikatglas oder lackbildenden oder leimbildenden Stoff in folgendem Komponentenverhältnis enthält: Gew. %:
Kompositverbindung (Verbundstoff) - 0,0001-10,0,
matrixbildender Bestandteil - der Rest.

20. Zusammensetzung nach Anspruch 19 zur Herstellung von Material, **gekennzeichnet dadurch,**
    **dass** sie die Partikeln der genannten Kompositverbindung in der Größenordnung von vorwiegend 300-800 nm enthält.

**21.** Zusammensetzung nach Anspruch 19,
**gekennzeichnet dadurch,**
**dass** sie zusätzlich mindestens eine Koordinationsverbindung von Metall E enthält, welche aus folgender Gruppe gewählt wird:

$[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E_4(AA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$,

dabei ist E das Metall, welches aus der Gruppe gewählt ist, die Europium, Samarium, Terbium, Gadolinium einschließt; H ist Wasserstoffion, AA ist Acetylacetonatanion, BB ist Benzoylbenzoat-Anion, Capr ist Capronatanion, DPhG ist Diphenylguanidin, HFAA ist Hexafluoracetylacetonat-Anion, Phen ist 1,10-Phenanthrolin, Ter ist Terephthalat (p-Phthalat)-Anion, TFA ist Trifluoracetat-Anion, TPhPO ist Triphenylphosphinoxid, TTA ist Thenoyltrifluoroazetonat-Anion, beim folgenden Komponentenverhältnis, Gew. %: Kompositverbindung - 0,0001 bis 10,0, Koordinationsverbindung - 0,001 bis 1,00, matrixbildende Komponente - der Rest.

**22.** Zusammensetzung nach Anspruch 19,
**gekennzeichnet dadurch,**
**dassß** sie als matrixbildende Komponente einen aus folgender Gruppe gewählten Kunststoff enthält: Polymethylmethacrylat, Polybutylmethacrylat, Polycarbonat, Polyethylenterephthalat, Polypropylen, Polyvinylchlorid (PVC), Polystyrol, Polyethylen, Polyamid, Derivate dieser Kunststoffe, Copolymere dieser Kunststoffe oder Mischungen dieser Kunststoffe.

**23.** Zusammensetzung nach Anspruch 19,
**gekennzeichnet dadurch,**
**dass** sie als matrixbildende Komponente siliciumorganisches Harz oder Polyesterharz oder Polyepoxidharz oder Epoxidharz oder ihre Mischung in beliebigen Kombinationen und Verhältnissen enthält.

**24.** Zusammensetzung nach Anspruch 19,
**gekennzeichnet dadurch,**
**dass** sie als matrixbildende Komponente natürliche Fasern enthält, die aus folgender Gruppe gewählt werden: Seide, Wolle, Baumwolle, Hanf, ihre Mischung.

**25.** Zusammensetzung nach Anspruch 19,
**gekennzeichnet dadurch,**
**dass** sie als matrixbildende Komponente Kunstfasern enthält, die aus folgender Gruppe gewählt werden: Acetat, Polyester, Polyamid, Polyacrylamid, ihre Mischung.

**26.** Zusammensetzung nach Anspruch 19,
**gekennzeichnet dadurch,**
**dass** sie als matrixbildende Komponente die Zusammensetzung zur Herstellung von Silikatglas oder modifiziertem Silikatglas enthält.

**27.** Zusammensetzung nach Anspruch 19,
**gekennzeichnet dadurch,**
**dass** sie als matrixbildende Komponente eine Zusammensetzung enthält, die für die lokale Anwendung in Form von geeigneten sowohl flüssigen (Gele, Emulsionen, Schäume und Ähnliches) als auch festen bzw. halbfesten (wie Cremes, Salben, Lippenstifte und Ähnliches) Zusammensetzungen vorgesehen ist.

**EP 2 135 916 A2**

**In der Beschreibung aufgeführte Patentdokumente**

- GB 2158833 A, Minich I.B.
- US 4081300 A
- JP 53136050 A
- JP 158103 A
- FR 2419955
- WO 941735 A
- CH 667463
- RU 2059999
- RU 2132856

**In der Beschreibung aufgeführte Nicht-Patentliteratur**

- **Y. A. Vladimirov et al.** *Free Radical Biol. Med.,* 1988, 281-286
- Photobiology of low-power laser therapy. **T.I. Karu et al.** Laser Science and Technology. Harwood Academic Publishers, 1989
- **Stoy V.** *Physiol. Plant,* 1965, vol. 14, 963-971
- **Inada K.** *Plant and cell physiol.,* 1976, vol. 17, 355-365
- **Shigeo Shionoya ; William M.Yen.** Phosphor Handbook. CRC Press, 1998
- **L.E. Shea ; J.Mc. Kittrick ; O.A. Lopez ; E. Sluzky.** Advantages of self-propagating combustion reactions for synthesis of oxide phosphors. *Journal of SID,* 1997, vol. 5 (2), 117-125
- **L.E. Shea ; J. Mc. Kittrik ; O.A. Lopez.** Sznthesis of red-emitting small particle size luminescent oxides. *J. Am. Ceram. Soc.,* 1996, vol. 79 (12), 3257
- **Zhang Wei-ping ; Yin Min.** Manufacturing and properties nano-particles of luminescent materials activated by RE elements. *Chin. J. Luminescence,* 2000, vol. 21 (4), 314-319
- **V.A. Vorobyov ; E.G. Morozov ; V.Ya. Viktyuk.** Die Anwendung von Brennverfahren zur Synthese von Luminophor Y203-Eu mit Submikron-Partikelgröße. *Sammelwerke von ZAO NPF ''Luminophor'',* 1999, 78-88
- **L.R. Melby ; N.J. Rose ; E. Abramson ; J.C. Caris.** Synthesis and Fluorescence of some Trivalent Lanthanide Complexes. *J. Amer. Chem. Soc.,* 1964, vol. 86 (23), 5117
- Remington's Pharmaceutical Handbook. Mack Publishing Co,